(19) Europäisches Patentamt / European Patent Office / Office européen des brevets

(11) **EP 3 992 243 B1**

(12) **EUROPEAN PATENT SPECIFICATION**

(45) Date of publication and mention
of the grant of the patent:
**12.11.2025 Bulletin 2025/46**

(21) Application number: **20831972.3**

(22) Date of filing: **23.06.2020**

(51) International Patent Classification (IPC):
*C08L 33/10* (2006.01)       *C08F 265/06* (2006.01)
*C08F 293/00* (2006.01)      *C08L 51/06* (2006.01)
*C08L 53/00* (2006.01)       *C08L 33/12* (2006.01)
*C08F 285/00* (2006.01)

(52) Cooperative Patent Classification (CPC):
(C-Sets available)
**C08F 265/06; C08F 285/00; C08L 33/12**     (Cont.)

(86) International application number:
**PCT/JP2020/024496**

(87) International publication number:
**WO 2020/262338 (30.12.2020 Gazette 2020/53)**

(54) **METHACRYLIC RESIN COMPOSITION, MOLDED ARTICLE OF SAME, AND METHOD FOR PRODUCING FILM**

METHACRYLHARZZUSAMMENSETZUNG, DARAUS GEFORMTER GEGENSTAND UND VERFAHREN ZUR HERSTELLUNG EINER FOLIE

COMPOSITION DE RÉSINE MÉTHACRYLIQUE, ARTICLE MOULÉ DE CELLE-CI, ET PROCÉDÉ DE PRODUCTION DE FILM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2019   JP 2019119359
27.06.2019   JP 2019119369
27.06.2019   JP 2019119377**

(43) Date of publication of application:
**04.05.2022   Bulletin 2022/18**

(73) Proprietor: **Kuraray Co., Ltd.
Kurashiki-shi, Okayama 710-0801 (JP)**

(72) Inventor: **NOMOTO, Yusaku
Tainai-shi, Niigata 959-2691 (JP)**

(74) Representative: **Müller-Boré & Partner
Patentanwälte PartG mbB
Friedenheimer Brücke 21
80639 München (DE)**

(56) References cited:
**EP-A1- 3 476 595        WO-A1-2012/057079
WO-A1-2016/080124    WO-A1-2018/003788
WO-A1-2018/074550    WO-A1-2018/074550
WO-A1-2018/221580**

(52) Cooperative Patent Classification (CPC): (Cont.)

C-Sets
**C08F 265/06, C08F 220/14;**
**C08F 285/00, C08F 220/14;**
**C08L 33/12, C08L 51/003, C08L 53/00;**
**C08L 33/12, C08L 51/04, C08L 53/00**

**Description**

Technical Field

The present invention relates to a methacrylic resin composition, a molded article of the composition, and a method for producing a film of the composition.

Background Art

Methacrylic resins have excellent optical performance, such as transparency and surface gloss, and mechanical performance, such as stiffness and scratch resistance, and are therefore conventionally used for various applications, for example, display parts such as for lighting equipment and signs, optical parts such as for display components, interior parts, construction parts, and electronic and electrical parts. However, methacrylic resins, which are a brittle material, are generally difficult to adapt to applications that require impact strength.

To improve the impact strength of methacrylic resin, the method of adding a multilayered polymer particle (i.e., a core-shell polymer particle) containing a rubber component layer inside and having a thermoplastic resin component layer as the outermost layer is preferably used. This method is the most widely performed industrially at present.

For example, Patent Literature (PTL) 1 discloses a method comprising blending a methacrylic resin with a multilayered acrylic rubber produced by an emulsion polymerization method. However, this method is not considered to fully improve the impact strength of the methacrylic resin, and a large amount of acrylic rubber must be added to achieve the required impact strength. The addition of a large amount of acrylic rubber is undesirable because it impairs inherent optical performance and mechanical performance of the methacrylic resin.

As a method for ameliorating the above problem, a method comprising blending a methacrylic resin with a block polymer is known. For example, Patent Literature (PTL) 2 discloses a methacrylic resin composition comprising a methacrylic resin and a block copolymer comprising a methacrylic acid ester polymer block and an acrylic acid ester polymer block. Patent Literature (PTL) 3 discloses a thermoplastic resin composition prepared by adding a block copolymer containing a methacrylic polymer block and an acrylic polymer block to a multilayered polymer particle comprising a copolymer of an acrylic acid ester and a methacrylic acid ester.

The resin compositions disclosed in these documents have a block polymer finely dispersed in a methacrylic resin and thus tend to have an improved balance between impact strength and optical performance and mechanical performance; however, the performance is insufficient.

Further, Patent Literature (PTL) 4 discloses an acrylic thermoplastic resin composition comprising a multilayered polymer particle having two or more layers and a block copolymer.

Patent Literature (PTL) 5 describes a methacrylic resin composition containing 75-99.8% by mass of a methacrylic resin including a crosslinked rubber component, 0.1-15% by mass of an ultraviolet absorber, and 0.1-10% by mass of a compound comprising a block copolymer or graft copolymer having a weight-average molecular weight of 32,000-300,000.

Patent Literature (PTL) 6 describes a molded body comprising an acrylic resin composition.

Citation List

Patent Literature

PTL 1: JPS59-36645B
PTL 2: WO2012/057079A
PTL 3: JP2002-194167A
PTL 4: WO2017/188290A
PTL 5: WO 2018/074550 A1
PTL 6: EP 3 476 595 A1

Summary of Invention

Technical Problem

The present invention was made considering the above circumstances. An object of the present invention is to provide a methacrylic resin composition having excellent impact strength, optical performance, and mechanical performance.

Solution to Problem

The present invention provides the methacrylic resin composition as defined in appended independent claim 1, the molded article of the composition as defined in appended independent claim 7, and the method for producing a film of the composition as defined in appended independent claim 9. Specific embodiments thereof are defined in the appended dependent claims.

Advantageous Effects of Invention

According to the present invention, a methacrylic resin composition that has excellent impact strength, optical performance, and mechanical performance can be provided.

Brief Description of Drawings

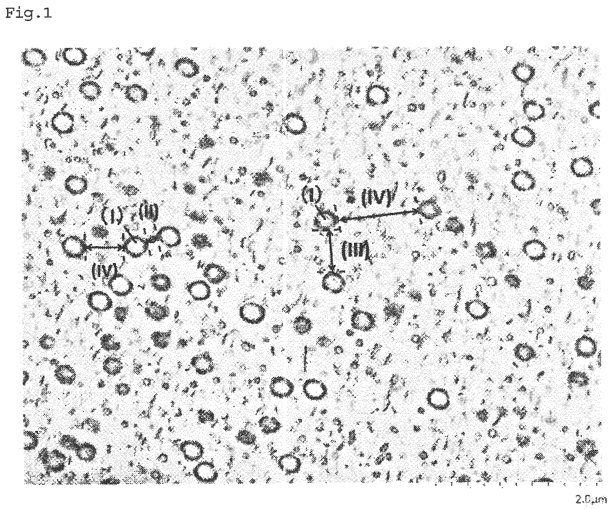

Fig. 1: A transmission electron microscope photograph showing the dispersibility of multilayered polymer particles (a) and a block copolymer (b) in a resin composition in Example 1.

(I): Particle (a)
(II): Used as Lr, Lr (0.12 $\mu$m) < L (0.22 $\mu$m)
(III): Used as Lr, Lr (0.54 $\mu$m) > L (0.22 $\mu$m)
(IV): Not used as Lr

Description of Embodiments

Methacrylic resin composition

The methacrylic resin composition of the present invention contains a methacrylic resin (A) and a rubber elastomer (B), wherein the rubber elastomer (B) contains at least one multilayered polymer particle comprising a multilayered polymer particle (a) having two or more layers and at least one block copolymer (b).
The multilayered polymer particle (a) contains at least one rubber component layer (aI) and at least one hard resin component layer (aII).
The block copolymer (b) contains at least one acrylic polymer block (bI) corresponding to a rubber component and at least one methacrylic polymer block (bII) corresponding to a hard resin component.
In this specification, the total amount of the rubber component layer (aI) and the acrylic polymer block (bI) is sometimes referred to as the "rubber component content." However, the methacrylic resin composition of the present invention may contain rubber components other than the rubber component layer (aI) and the acrylic polymer block (bI).
The methacrylic resin composition of the present invention preferably contains 20 to 90 mass% of the methacrylic resin (A) and 10 to 80 mass% of the rubber elastomer (B), and more preferably contains 30 to 85 mass% of the methacrylic resin (A) and 15 to 70 mass% of the rubber elastomer (B).
In one preferred embodiment, the methacrylic resin composition of the present invention contains 20 to 90 mass% of the methacrylic resin (A), 5 to 40 mass% of the multilayered polymer particle (a), and 5 to 40% by mass of the block copolymer (b).
The methacrylic resin composition of the present invention contains 3 to 20 mass%, more preferably 3 to 18 mass%, and even more preferably 3.5 to 15 mass% of the rubber component layer (aI) of the multilayered polymer particle (a).

Methacrylic resin (A)

The methacrylic resin (A) used in the present invention has a structural unit derived from methyl methacrylate in an amount of 80 mass% or more, and preferably 90 mass% or more. Further, the methacrylic resin (A) has a structural unit derived from a monomer other than methyl methacrylate in an amount of 20 mass% or less, and preferably 10 mass% or less.
Examples of the monomer other than methyl methacrylate include acrylic acid esters, such as methyl acrylate, ethyl acrylate, n-propyl acrylate, isopropyl acrylate, n-butyl acrylate, isobutyl acrylate, s-butyl acrylate, t-butyl acrylate, amyl acrylate, isoamyl acrylate, n-hexyl acrylate, 2-ethylhexyl acrylate, pentadecyl acrylate, dodecyl acrylate; phenyl acrylate, benzyl acrylate, phenoxyethyl acrylate, 2-hydroxyethyl acrylate, 2-ethoxyethyl acrylate, glycidyl acrylate, allyl acrylate; cyclohexyl acrylate, norbornenyl acrylate, and isobornyl acrylate; methacrylic acid esters other than methyl methacrylate, such as ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, 2-ethylhexyl methacrylate, pentadecyl methacrylate, dodecyl methacrylate; phenyl methacrylate, benzyl methacrylate, phenoxyethyl methacrylate, 2-hydroxyethyl methacrylate, 2-ethoxyethyl methacrylate, glycidyl methacrylate, allyl methacrylate; cyclohexyl methacrylate, norbornenyl methacrylate, and isobornyl methacrylate; unsaturated carboxylic acids, such as acrylic acid, methacrylic acid, maleic anhydride, maleic acid, and itaconic acid; olefins, such as ethylene, propylene, 1-butene, isobutene, and 1-octene; conjugated dienes, such as butadiene, isoprene, and myrcene; aromatic vinyl compounds, such as styrene, $\alpha$-methylstyrene, p-methylstyrene, and m-methylstyrene; and acrylamide, methacrylamide, acrylonitrile, methacrylonitrile, vinyl acetate, vinyl pyridine, vinyl ketone, vinyl chloride, vinylidene chloride, and vinylidene fluoride.

The tacticity of the methacrylic resin (A) is not particularly limited, and for example, resins that have isotactic, heterotactic, or syndiotactic tacticity may be used.

The methacrylic resin (A) preferably has a weight average molecular weight ("Mw (A)") of 30,000 or more and 1,000,000 or less, more preferably 40,000 or more and 800,000 or less, and particularly preferably 50,000 or more and 500,000 or less. When the Mw (A) is too low, the impact resistance and toughness of molded articles produced from the obtained methacrylic resin composition tend to decrease. When the Mw (A) is too large, the fluidity of the methacrylic resin composition tends to decrease and the moldability decreases.

The ratio of the weight average molecular weight Mw (A) to the number average molecular weight Mn (A) of the methacrylic resin (A), Mw (A)/Mn (A) (the ratio of the weight average molecular weight to the number average molecular weight (weight average molecular weight/number average molecular weight) may be referred to below as the "molecular weight distribution") is preferably 1.03 or more and 2.6 or less, more preferably 1.05 or more and 2.3 or less, and particularly preferably 1.2 or more and 2.0 or less. When the molecular weight distribution is too low, the moldability of the methacrylic resin composition tends to decrease. When the molecular weight distribution is too high, the impact resistance of molded articles obtained from the methacrylic resin composition is reduced, and the molded articles tend to be brittle.

Mw (A) and Mn (A) are values measured by GPC (gel permeation chromatography) and expressed in terms of standard polystyrene.

The molecular weight and molecular weight distribution of the methacrylic resin can be controlled by adjusting the type and amount of the polymerization initiator and chain transfer agent.

The methacrylic resin (A) is obtained by polymerizing a monomer or monomer mixture containing 80 mass% or more of methyl methacrylate.

The present invention may use a commercial product as the methacrylic resin (A). Examples of such commercially available methacrylic resins include PARAPET H1000B (MFR: 22 g/10 min (230°C, 37.3N)), PARAPET GF (MFR: 15 g/10 min (230°C, 37.3N)), PARAPET EH (MFR: 1.3 g/10 min (230°C, 37.3N)), PARAPET HRL (MFR: 2.0 g/10 min (230°C, 37.3N)), and PARAPET G (MFR: 8.0 g/10 min (230°C, 37.3N)) (all trade names, manufactured by Kuraray Co.).

Rubber elastomer (B)

The rubber elastomer (B) used in the present invention contains at least one multilayered polymer particle (a) comprising two or more layers and at least one block copolymer (b).

The particle size distribution of the rubber elastomer (B) is multimodal, wherein one peak of the rubber elastomer (B) that has the largest average particle size includes a multilayered polymer particle (a) comprising two or more layers, and another peak that has the smallest average particle size includes a block copolymer (b) comprising a methacrylic polymer block (bII) and an acrylic polymer block (bI).

The rubber elastomer (B) contains at least one multilayered polymer particle (a) and at least one block copolymer (b) and therefore can be bimodal, trimodal, quadrimodal, or more. Since the average particle size of the multilayer polymer particles (a) is larger than that of the block copolymer (b), one peak that has the largest average particle size is the multilayered polymer particle (a) and another peak that has the smallest average particle size is the block copolymer (b).

Multilayered polymer particle (a)

The multilayered polymer particle (a) is a particle having a core-shell structure that comprises at least one rubber component layer (aI) inside (sometimes simply referred to below as "(aI)") and further comprises at least one hard resin component layer (aII) (sometimes simply referred to below as "(aII)"), with the outermost part comprising a hard resin component layer (aII).

The core of the multilayered polymer particle (a) is regarded as a layer. The number of layers of the multilayered polymer particle (a) may be two or more, and can be three or four or more. Examples of the layer structure include a two-layer structure of (aI)-(aII); a three-layer structure of (aI)-(aI)-(aII), (aI)-(aII)-(aII), or (aII)-(aI)-(aII); and a four-layer structure of (aI)-(aII)-(aI)-(aII); in the order from the center. Among these, a two-layer structure of (aI)-(aII) or a three-layer structure of (aI)-(aI)-(aII) or (aII)-(aI)-(aII) is preferable, and a three-layer structure of (aII)-(aI)-(aII) is more preferable, from the viewpoint of handling.

The mass ratio of the total amount of the rubber component layer (aI) to the total amount of the hard resin component layer (aII) ((aI)/(aII)) is in the range of 30/70 to 90/10. When the proportion of the layer (aI) is less than the range described above, molded articles of the resin composition of the present invention may have insufficient impact strength. When the proportion of the layer (aI) is more than the range described above, it is difficult to form a particle structure and melt fluidity is reduced, which makes it difficult to knead the rubber component with other components and mold the resin composition of the present invention. The mass ratio ((aI)/(aII)) is preferably in the range of 30/70 to 80/20, more preferably 40/60 to 70/30. When the resin composition of the present invention comprises two or more rubber component layers (aI), the mass ratio is calculated based on the total amount of the rubber component layers. When the resin composition of the present invention comprises two or more hard resin component layers (aII), the mass ratio is calculated based on the total amount of the resin component layers.

The layer (aI) preferably contains a copolymer comprising 50 to 89.99 mass% of an acrylic acid ester monomer unit, 44.99 to 10 mass% of an additional monofunctional monomer unit, and 0.01 to 10 mass% of a multifunctional monomer unit. The content of the acrylic acid ester monomer unit is more preferably 55 to 89.9 mass%, the content of the additional monofunctional monomer unit is more preferably 44.9 to 10 mass%, and the content of the polyfunctional monomer unit is more preferably 0.1 to 5 mass%.

If the content of the acrylic acid ester monomer is less than 50 mass%, molded articles of the resin composition of the present invention may have insufficient impact strength due to insufficient rubber elasticity of the multilayered polymer particle (a). If the content of the acrylic acid ester monomer is more than 99.99 mass%, it may be difficult to form the particle structure. If the content of the additional monofunctional monomer unit is less than 10 mass%, the multilayered polymer particle may have insufficient optical performance. If the content of the additional monofunctional monomer unit is more than 44.99 mass%, the multilayered polymer particle (a) may have insufficient weather resistance. If the content of the multifunctional monomer unit is more than 10 mass%, molded articles of the methacrylic resin composition of the present invention may have insufficient impact strength due to insufficient rubber elasticity of the multilayered polymer particle (a). If the content of the multifunctional monomer unit is less than 0.01 mass%, it may be difficult to form the particle structure.

The starting monomers of the rubber component layer (aI) are described below.

Examples of acrylic acid esters include esters of acrylic acid and saturated aliphatic alcohols (preferably $C_1$ to $C_{18}$ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and $C_5$ or $C_6$ alicyclic alcohols, such as cyclohexyl acrylate; esters of acrylic acid and phenols, such as phenyl acrylate; esters of acrylic acid and aromatic alcohols, such as benzyl acrylate. Such acrylic acid esters can be used singly or in a combination of two or more.

Examples of the additional monofunctional monomer include methacrylic acid esters including the following: esters of methacrylic acid and saturated aliphatic alcohols (preferably $C_1$ to $C_{22}$ saturated aliphatic alcohols), such as methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, dodecyl methacrylate, myristyl methacrylate, palmityl methacrylate, stearyl methacrylate, and behenyl methacrylate; esters of methacrylic acid and $C_5$ or $C_6$ alicyclic alcohols, such as cyclohexyl methacrylate; esters of methacrylic acid and phenols, such as phenyl methacrylate; and esters of methacrylic acid and aromatic alcohols, such as benzyl methacrylate; aromatic vinyl monomers such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers such as acrylonitrile and methacrylonitrile. Among these, styrene is preferred. Such additional monofunctional monomers can be used singly or in a combination of two or more.

Polyfunctional monomers are monomers having two or more carbon-carbon double bonds in the molecule. Polyfunctional monomers include esters of unsaturated monocarboxylic acids, such as acrylic acid, methacrylic acid, and cinnamic acid, with unsaturated alcohols, such as allyl alcohol and β-methallyl alcohol; diesters of unsaturated monocarboxylic acids, such as those described above, with glycols, such as ethylene glycol, butanediol and hexanediol; and diesters of dicarboxylic acids, such as phthalic acid, terephthalic acid, isophthalic acid and maleic acid, with unsaturated alcohols, such as those described above. Specific examples include allyl acrylate, methallyl acrylate, allyl methacrylate (ALMA), methallyl methacrylate, allyl cinnamate, methallyl cinnamate, diallyl maleate, diallyl phthalate, diallyl terephthalate, diallyl isophthalate, divinyl benzene, and ethylene glycol di(meth)acrylate, butanediol di(meth)acrylate, and hexanediol di(meth)acrylate. Among these, allyl methacrylate (ALMA) is preferred. Polyfunctional monomers can be used singly or in a combination of two or more.

The layer (aII) preferably contains a copolymer of 50 to 100 mass% of a methacrylic acid ester monomer unit and 50 to 0 mass% of an additional monomer unit. The content of the methacrylic acid ester monomer unit is more preferably 60 to 99 mass%, even more preferably 80 to 99 mass%, and the content of the additional monomer unit is more preferably 50 to 1 mass%, even more preferably 20 to 1 mass%. If the content of the methacrylic acid ester monomer unit is less than 50 mass%, the multilayered polymer particle (a) may have insufficient weather resistance.

The starting monomers of the hard resin component layer (aII) are described below.

Examples of the methacrylic acid ester include methyl methacrylate (MMA), ethyl methacrylate, n-propyl methacrylate, isopropyl methacrylate, n-butyl methacrylate, isobutyl methacrylate, pentyl methacrylate, hexyl methacrylate, octyl methacrylate, 2-ethylhexyl methacrylate, cyclohexyl methacrylate, dodecyl methacrylate, myristyl methacrylate, palmityl methacrylate, stearyl methacrylate, behenyl methacrylate, octadecyl methacrylate, phenyl methacrylate, benzyl methacrylate. Among these, methyl methacrylate (MMA) is preferred.

Examples of the additional monomer include esters of acrylic acid and saturated aliphatic alcohols (preferably $C_1$ to $C_{18}$ saturated aliphatic alcohols), such as methyl acrylate (MA), ethyl acrylate, n-propyl acrylate, isopropyl acrylate, n-butyl acrylate (BA), isobutyl acrylate, s-butyl acrylate, t-butyl acrylate, pentyl acrylate, hexyl acrylate, octyl acrylate, 2-ethylhexyl acrylate, dodecyl acrylate, and octadecyl acrylate; esters of acrylic acid and $C_5$ or alicyclic alcohols, such as cyclohexyl acrylate; aromatic vinyl monomers such as styrene (St), $\alpha$-methylstyrene, 1-vinylnaphthalene, 3-methylstyrene, 4-propylstyrene, 4-cyclohexylstyrene, 4-dodecylstyrene, 2-ethyl-4-benzylstyrene, 4-(phenylbutyl)styrene, and halogenated styrene; vinyl cyanide monomers such as acrylonitrile and methacrylonitrile; maleimide monomers such as maleimide, N-methylmaleimide, N-ethylmaleimide, N-propylmaleimide, N-isopropylmaleimide, N-cyclohexylmaleimide, N-phenylmaleimide, N-(p-bromophenyl)maleimide, and N-(chlorophenyl)maleimide; polyfunctional monomers given as examples in the description of the layer (aI). Among these, alkyl esters of acrylic acid such as methyl acrylate (MA), ethyl acrylate, and n-butyl acrylate (BA) are preferred.

In the multilayered polymer particle (A), the constituent copolymer of the layer (aII) that constitutes the outermost layer preferably has a weight-average molecular weight (Mw) as measured by GPC of 20,000 to 100,000, more preferably 30,000 to 90,000, and particularly preferably 40,000 to 80,000. If the Mw is less than 20,000, the multilayered polymer particles (a) may have insufficient rubber elasticity, and it may be difficult to form molded articles of the resin composition of the present invention. If the Mw is more than 100,000, the molded product may have reduced impact strength.

The average particle size (de) of the outermost rubber component layer of the multilayered polymer particle (a) is in the range of 0.05 to 0.3 $\mu$m and preferably in the range of 0.19 to 0.30 $\mu$m. In the resin composition, the multilayered polymer particle (a) provides a field of stress concentration. If the average particle size is less than 0.05 $\mu$m, the stress concentration on the multilayered polymer particles (a) is insufficient, and the molded article may have reduced impact strength. If the average particle size is more than 0.3 $\mu$m, voids are more likely to form inside the multilayered polymer particle (a). When the rubber content of the resin composition is constant, the number of particles decreases as the particle size increases beyond a certain level; therefore, the surface-to-surface distance between the particles tends to increase, which increases the probability of cracking in the continuous phase and may reduce the impact strength of the molded article. Voids as referred to herein mean fractures that occur only inside the particles. Since the amount of energy absorbed is very small, it does not contribute very much to the development of impact resistance. From the viewpoint of stress concentration on the multilayered polymer particles (a), the average particle size is preferably 0.06 to 0.25 $\mu$m, and more preferably 0.07 to 0.23 $\mu$m.

The average particle size (de) of the rubber component layer of the multilayered polymer particle (a) can be determined by a method in which the resin composition is measured by electron microscopy or by a method in which the latex is measured by a light scattering method. When the electron microscopy method is used, the resin composition of the present invention is electronically stained with ruthenium tetroxide, and among the stained rubber component layers (aII) of the multilayered polymer particle (a) observed under a transmission electron microscope, the average of the long axis diameter and the short axis diameter of the rubber component layer (aII) that constitutes the outermost part is determined as the average particle size (de) of the rubber component layer. When the light scattering method is used, the latex polymerized up to the rubber component layer during the polymerization of the multilayered polymer particle is sampled, and the average particle size (de) of the rubber component layer can be determined by using an LA-950V2 laser diffraction/scattering particle size distribution analyzer manufactured by Horiba, Ltd.

The theoretical surface-to-surface distance (L) of the rubber component layer of the multilayered polymer particle (a) has a relationship represented by the following theoretical formula (X) as described in the literature (S. Wu; Polymer, 26, 1855, (1985)).

$$\mathrm{L} \;=\; \mathrm{de} \;\times\; ((\pi/6\varphi)^{1/3} - 1) \qquad\qquad (\mathrm{X})$$

L: theoretical surface-to-surface distance of the rubber component layer part of the multilayered polymer particle (a)
de: average particle size of the rubber component layer of the multilayered polymer particle (a)
$\varphi$: volume fraction up to the rubber component layer of the multilayered polymer particle (a)

The resin composition of the present invention satisfies the following relationship between the theoretical surface-to-surface distance (L) of the rubber component layer of the multilayered polymer particle (a) and the average particle size (de) of the rubber component layer of the multilayered polymer particle satisfy the following relationship:

$$L/de^2 \leq 5.5 \qquad (W)$$

L: theoretical surface-to-surface distance of the multilayered polymer particle rubber component layer (aI);
de: average particle size of the multilayered polymer particle rubber component layer (aI);

wherein the theoretical surface-to-surface distance (L) of the multilayered polymer particle rubber component layer (aI) is calculated from the above formula (X).

Preferably, $L/de^2 \leq 5.4$, and more preferably $L/de^2 \leq 5.3$.

By satisfying the relation $L/de^2 \leq 5.5$, the stress state of the matrix region between the rubber component layers of the multilayered polymer particle (a) is changed. The presence of block copolymer (b) in the matrix region contributes to shear yielding and improves the impact strength.

According to the present invention, the resin composition of the present invention is such that the number of particles of the multilayered polymer particles (a) satisfying the following formula (V) is 20% or more of the total number of the particles of the multilayered polymer particle (a). It is preferably 30% or more, more preferably 40% or more, even more preferably 50% or more. It is preferably 90% or less. When the resin composition of the present invention satisfies the relation of the following formula (V), sparseness or denseness occurs in the distribution of the multilayered polymer particle (a) of the resin composition. As a result, even when the content of the multilayered polymer particle (a) is small, particles satisfying the above relation $L/de \leq 1.1$ are generated, and the impact strength is improved.

The following is formula (V):

$$L>Lr \qquad\qquad\qquad (V)$$

L: theoretical surface-to-surface distance of the rubber component layer of the multilayered polymer particle
Lr: measured surface-to-surface distance of the rubber component layer of the multilayered polymer particle

The evaluation of formula (V) is made from the image observed under a transmission electron microscope when the resin composition of the present invention is electronically stained with ruthenium tetroxide. More specifically, when the resin composition of the present invention is electronically stained with ruthenium tetroxide, layer (I) of the multilayered polymer particle (a) is stained. When the resin composition of the present invention is electronically stained with ruthenium tetroxide and observed under a transmission electron microscope, the distance from the outermost layer surface of the stained layer (I) of one multilayered polymer particle (a) to the outermost layer surface of the layer (aI) of another multilayered polymer particle (a) is measured to determine Lr. The number of particles around which at least one other particle that satisfies L > Lr is present is defined as the number of the multilayered polymer particles wherein L > Lr.

When a single craze occurs in the matrix, deformation is concentrated in that area and grows into a crack and fractures. However, if crazing occurs simultaneously and the growth of individual crazes is controlled so that the crazes do not grow into cracks, the impact strength is improved because the impact energy can be absorbed by craze deformation as a whole. The multilayered polymer particle (a) dispersed in the matrix plays a role in providing a stress concentration field in which such a large number of crazes preferentially occur. Therefore, in general, the impact strength tends to increase when the multilayered polymer particle (a) is uniformly dispersed in the matrix without sparseness or denseness.

In contrast, in the resin composition of the present invention, the impact strength tends to increase when the multilayered polymer particle (a) is non-uniformly dispersed in the matrix. This is because, as described above, under conditions where the surface-to-surface distance of the particle rubber component layer is at or below the critical value, the stress state in the matrix region between rubber component layers of the multilayered polymer particle (a) changes, and the presence of the block copolymer (b) in the matrix region causes shear yielding instead of craze deformation. The term "craze" or "crazing" as referred to herein means a phenomenon in which the generation of voids and the orientation of molecular chain bundles (fibrils) in the direction of deformation occur locally and simultaneously.

The non-uniform dispersion of the multilayered polymer particle (a) may be allowed to occur in any of the following steps:

a step of polymerizing the multilayered polymer particle (a);
a step of mixing with a methacrylic resin (A) and/or a block copolymer (b); and
a step of molding.

In one preferred embodiment of the present invention, the method of producing the multilayered polymer particle (a) of the present invention is not particularly limited as long as the method can obtain a multilayered polymer particle (a) having a rubber component layer (aI)/a hard resin component layer (aII) as described above. The preferred method for producing the multilayered polymer particle (a) having a three-layer structure (the core-intermediate layer-outermost layer) of the present invention comprises the steps of subjecting a monomer for obtaining a polymer that constitutes the center core to emulsion polymerization to obtain a seed particle (i), subjecting a monomer for obtaining a polymer that constitutes an intermediate layer to emulsion polymerization in the presence of the seed particle (i) to obtain a seed particle (ii), and subjecting a monomer for obtaining a polymer that constitutes the outermost layer to emulsion polymerization in the presence of the seed particle (ii) to obtain a seed particle (iii). The multilayered polymer particle (a) having a two-layer structure or a structure of four or more layers can be easily produced by a person skilled in the art with reference to the above description of the method for producing the multilayered polymer particle (a) having a three-layer structure. The emulsion polymerization or seed emulsion polymerization method is a technique well known in the art for obtaining general multilayered polymer particles, and a detailed explanation can be obtained by referring to other literature. In the case of the above preferred example, the seed particle (i) is a single layer particle consisting of a hard resin component layer (aII, the core), the seed particle (ii) is a two-layered particle consisting of a hard resin component layer (aII, the core) and a rubber component layer (aI, an intermediate layer), and the seed particle (iii) is a three-layered particle consisting of a hard resin component layer (aII, the core), a rubber component layer (aI, an intermediate layer), and a hard resin component layer (aII, the outermost layer).

In the polymerization reaction step, the polymerization conditions are adjusted so that the constituent copolymer of the hard resin component layer (aII) that constitutes at least the outermost part has a Mw of 20,000 to 100,000. The polymerization conditions are adjusted mainly by the amount of molecular weight modifier, such as alkyl mercaptan. The polymerization conditions of the entire polymerization reaction process are adjusted so that the average particle size up to the outermost hard resin component layer (aII) of the final multilayered polymer particle (a) is in the range of 0.07 to 0.35 $\mu$m.

The average particle size up to the outermost hard resin component layer (aII) of the multilayered polymer particle (a) is determined by sampling the polymerized latex at the time of polymerization of the multilayered polymer particles and measuring the particle size distribution by the light scattering method using an LA-950V2 laser diffraction/scattering particle size analyzer manufactured by Horiba, Ltd.

The separation and acquisition of the multilayered polymer particle (a) from the emulsion obtained by seed emulsion polymerization can be carried out by known methods, such as the salting-out coagulation method, the freeze coagulation method, and the spray drying method. From the viewpoint that impurities contained in the multilayered polymer particle (a) can be easily removed by washing with water, the salting-out coagulation method and the freezing coagulation method are preferable, and the freezing coagulation method is more preferable. The freeze coagulation method has a large agglomerate size and/or agglomeration energy, and the multilayered polymer particle (a) tends to be dispersed non-uniformly when dispersed in the resin composition of the present invention.

Block copolymer (b)

The block copolymer (b) used in the present invention comprises a methacrylic ester polymer block (bII) and an acrylic ester polymer block (bI). The block copolymer (b) may have only one or multiple methacrylic acid ester polymer blocks (bII). The block copolymer (b) may also have only one or multiple acrylic ester polymer blocks (bI). The block copolymer (b) has good compatibility with the methacrylic resin (A) and multilayered polymer particles (b).

From the viewpoint of the compatibility, the block copolymer (b) comprises 10 to 80 mass% of a polymer block (bII) having a methacrylic acid ester monomer unit, and 90 to 20 mass% of a polymer block (bI) mainly comprising an acrylic acid ester monomer unit (based on the total amount of the polymer block (bII) and the polymer block (bI) being defined as 100 mass%). In the block copolymer (b), the content of the polymer block (bII) is more preferably 20 and 70 mass%, and even more preferably 30 to 60 mass%, and the content of the polymer block (bI) is more preferably 80 to 30 mass%, and even more preferably 70 to 40 mass%.

The number of the polymer block (bII) per molecule may be one or more. When multiple polymer blocks (bII) are present in one molecule, the structural units of the polymer blocks (bII) may be the same or different in formulation and molecular weight. Similarly, the number of the polymer blocks (bI) per molecule may be one or more. When multiple polymer blocks (bI) are present in one molecule, the structural units of the polymer blocks (bI) may be the same or different in formulation and molecular weight.

The polymer block (bII) mainly contains a methacrylic acid ester monomer unit. The content of the methacrylic acid ester monomer unit in the polymer block (bII) is preferably 80 mass% or more, more preferably 90 mass% or more, particularly preferably 95 mass% or more, and most preferably 98 mass% or more, and the polymer block (bI) may consist only of a methacrylic acid ester monomer unit.

The starting monomers of the methacrylic polymer block (bII) are described below.

Examples of the methacrylic acid ester include methyl methacrylate (MMA), ethyl methacrylate, n-propyl methacrylate, isopropyl methacrylate, n-butyl methacrylate, isobutyl methacrylate, s-butyl methacrylate, t-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, allyl methacrylate (ALMA), and the like. Among these, methyl methacrylate (MMA), ethyl methacrylate, isopropyl methacrylate, n-butyl methacrylate, t-butyl methacrylate, cyclohexyl methacrylate, isobornyl methacrylate are preferred, and methyl methacrylate (MMA) is particularly preferred from the viewpoint of improvement in transparency and heat resistance of the methacrylic resin composition of the present invention. The methacrylic acid esters can be used singly or in a combination of two or more.

The weight-average molecular weight of the methacrylic polymer block (bII) (referred to as "Mw (bII)") is such that the lower limit is preferably 5,000, more preferably 8,000, even more preferably 12,000, particularly preferably 15,000, and most preferably 20,000; and the upper limit is preferably 150,000, more preferably 120,000, and particularly preferably 100,000. When the block copolymer (b) comprises multiple polymer blocks (bII), the weight-average molecular weight (Mw (bII)) is the total Mw of the polymer blocks (bII).

According to the present invention, the weight-average molecular weight of the methacrylic polymer block (bII) of the block copolymer (b) (referred to as "Mw (bII)") and the weight average molecular weight of the methacrylic resin (A) (referred to as "Mw (A)") satisfy the following formula (Y).

$$0.5 \leq Mw\ (A)/Mw\ (bII) \leq 2.5 \qquad (Y)$$

The ratio of the weight average molecular weight Mw (A) of the methacrylic resin (A) to Mw (bII), i.e., Mw (A)/Mw (bII) is 0.5 or more and 2.5 or less, preferably 0.6 and more and 2.3 or less, more preferably 0.7 or more and 2.2 or less. If the Mw (A)/Mw (bII) ratio is too small, molded articles produced from the resin composition tend to have a lower impact strength. On the other hand, if the Mw (A)/Mw (bII) ratio is too large, sheetlike molded articles produced from the resin composition tend to have poor impact strength and transparency. When the Mw (A)/Mw (bII) ratio is within the above range, the particle size of the block copolymer (b) dispersed in the methacrylic resin (A) is small, thus providing excellent transparency.

The content of the methacrylic polymer block (bII) in the block copolymer (b) is preferably 10 to 80 mass%, and more preferably 20 to 70 mass%, from the standpoint of transparency, flexibility, flexibility, bending resistance, impact resistance, moldability, and surface smoothness of molded articles of the thermoplastic resin composition of the present invention. When the block copolymer (b) has multiple polymer blocks (bII), the polymer block (bII) content is the total content of the polymer blocks (bII).

In one preferred embodiment of the present invention, the acrylic polymer block (bI) mainly contains an acrylic acid ester monomer unit. The content of the acrylic acid ester monomer unit in the acrylic polymer block (bI) is preferably 45 mass% or more, more preferably 50 mass% or more, even more preferably 60 mass% or more, particularly preferably 65 mass% or more, particularly more preferably 70 mass% or more, and most preferably 90 mass% or more.

The starting monomer of the acrylic polymer block (bI) is described below.

Examples of acrylic acid esters include methyl acrylate, ethyl acrylate, n-propyl acrylate, isopropyl acrylate, n-butyl acrylate (BA), isobutyl acrylate, s-butyl acrylate, t-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, allyl acrylate. Acrylic acid esters can be used singly or in a combination of two or more.

In another preferred embodiment of the present invention, from the viewpoint of transparency of the resin composition of the present invention, the acrylic polymer block (bI) is preferably a polymer block (bI-p) comprising an acrylic acid alkyl ester monomer unit and a (meth)acrylic acid aromatic hydrocarbon ester monomer unit. The content of the acrylic acid alkyl ester monomer unit in the polymer block (bI) is preferably 50 to 90 mass%, and more preferably 60 to 80 mass%; and the content of the (meth)acrylic acid aromatic hydrocarbon ester monomer unit in the polymer block (bI) is preferably 50 to 10 mass%, and more preferably 40 to 20 mass%.

The (meth)acrylic acid aromatic hydrocarbon ester means an aromatic hydrocarbon ester of acrylic acid or an aromatic hydrocarbon ester of methacrylic acid. Examples of the (meth)acrylic acid aromatic hydrocarbon ester include phenyl acrylate, benzyl acrylate, phenoxyethyl acrylate, styryl acrylate, phenyl methacrylate, benzyl methacrylate, phenoxyethyl methacrylate, styryl methacrylate, and the like. Among these, phenyl methacrylate, benzyl methacrylate, phenoxyethyl methacrylate, and benzyl acrylate are preferred.

According to the present invention, the weight average molecular weight of the acrylic polymer block (bI) referred to as "Mw (bI)" satisfies the following formula (Z), and more preferably the following formula (Z1).

$$5,000 \leq Mw\ (bI) \leq 120,000 \qquad (Z)$$

$$40,000 \leq \mathrm{Mw}\ (\mathrm{bI}) \leq 120,000 \qquad (\mathrm{Z1})$$

The weight-average molecular weight of the acrylic polymer block (bI), i.e., Mw (bI) is such that the lower limit of the weight-average molecular weight Mw (bI) is 5,000, more preferably 15,000, even more preferably 20,000, particularly preferably 30,000, and most preferably 40,000, and the upper limit of the weight-average molecular weight Mw (bI) is 120,000, more preferably 110,000, and particularly preferably 100,000. If the Mw (bI) is too small, the molded article of the methacrylic resin composition of the present invention may have reduced impact resistance. On the other hand, if the Mw (bI) is too large, the molded article of the resin composition of the present invention may have reduced surface smoothness. When the block copolymer (b) comprises multiple polymer blocks (bI), the weight average molecular weight Mw (bI) is the total amount of Mw of the polymer blocks (bI).

The content of the acrylic polymer block (bI) in the block copolymer (b) is preferably 10 to 90 mass%, and more preferably 20 mass% to 80 mass%, from the viewpoint of transparency, flexibility, pliability, flex resistance, impact resistance, moldability, and surface smoothness of molded articles of the methacrylic resin composition of the present invention. When the block copolymer (b) comprises multiple polymer blocks (bI), the polymer block (bI) content is the total content of the polymer blocks (bI).

The average domain size of the acrylic polymer block (bI) of the block copolymer (b) can be measured as follows. The resin composition of the present invention is electronically stained with ruthenium tetroxide, and the average of the long axis diameter and short axis diameter of the acrylic polymer block (bI) of the stained block copolymer (b) observed under a transmission electron microscope is determined as a domain size. The domain size of 10 domains appropriately selected from each stained acrylic polymer block (bI) in the transmission electron microscope image is measured. The average value is defined as the average domain size.

The average domain size of the acrylic polymer block (bI) of the block copolymer (b) is preferably less than or equal to the average particle size of the rubber component layer (aI) of the multilayered polymer particle (a).

The ratio of the acrylic polymer block (bI) to the multilayered polymer particle (a) (the average domain size of the acrylic polymer block (bI)/the average particle size of the rubber component layer (aI)) is preferably in the range 0.06 to 1.0. By having the average domain size of the acrylic polymer block (bI) in the above range, the methacrylic resin composition of the present invention has excellent impact strength.

The bonding form of the methacrylic polymer block (bII) and the acrylic polymer block (bI) in the block copolymer (b) is not particularly limited. Examples of the block copolymer (b) include linear block copolymers including the following: a diblock copolymer having a (bII)-(bI) structure in which one end of the polymer block (bII) is connected to one end of the polymer block (bI), a triblock copolymer having a (bI)-(bII)-(bI) structure in which both ends of the polymer block (bII) are connected to one end of each polymer block (bI), and a triblock copolymer having a (bII)-(bI)-(bII) structure in which both ends of the polymer block (bI) are connected to one end of each polymer block (bII).

Among them, diblock copolymers and triblock copolymers are preferred, and a diblock copolymer having a (bII)-(bI) structure and a triblock copolymer having a (bII)-(bI)-(bII) structure are more preferred.

The block copolymer (b) may, if necessary, have functional groups, such as hydroxyl groups, carboxyl groups, acid anhydride groups, and amino groups, in the molecular chain and/or at ends of the molecular chain.

The weight-average molecular weight (Mw (b)) of the block copolymer (B) is 32,000 to 300,000, preferably 40,000 to 250,000, more preferably 45,000 to 230,000, and particularly preferably 50,000 to 200,000. When Mw (b) falls within the range described above, unmelted matter at the time of melt kneading of starting materials in the production of the resin composition, which is responsible for defect formation in a molded article, can be reduced to a very small amount.

The ratio of the weight-average molecular weight (Mw (b)) to the number-average molecular weight (Mn (b)) (Mw (b)/Mn (b)) in the block copolymer (b) is preferably in the range of 1.0 to 2.0, and more preferably 1.0 to 1.6. When the Mw (b)/Mn (b) ratio falls within the range described above, unmelted matter at the time of melt kneading of starting materials in the production of the resin composition, which is responsible for defect formation in molded articles can be reduced to a very small amount.

The method for producing the block copolymer (b) is not particularly limited and is generally a method of subjecting each polymer block to living polymerization. Examples of the living polymerization method include a method comprising performing anionic polymerization in the presence of a mineral acid salt, such as an alkali metal or alkaline earth metal salt using an organic alkali metal compound as a polymerization initiator, a method comprising performing anionic polymerization in the presence of an organoaluminum compound using an organic alkali metal compound as a polymerization initiator, a method comprising performing polymerization using an organic rare earth metal complex as a polymerization initiator, and a method comprising performing radical polymerization in the presence of a copper compound using an α-halogenated ester compound as a polymerization initiator. Other examples include a method comprising performing polymerization using a polyvalent radical polymerization initiator or a polyvalent radical chain transfer agent. Among these, a method comprising performing anionic polymerization in the presence of an organoaluminum compound using an organic alkali metal compound as a polymerization initiator is particularly preferred because the method produces the block copolymer (b) with high purity easily and controls the formulation and molecular weight of each block, and is economical.

The refractive index of the block copolymer (b) is not particularly limited and is preferably 1.485 to 1.495, and more preferably 1.487 to 1.493. When the refractive index falls within the range described above, the thermoplastic resin composition of the present disclosure has high transparency. In the present specification, "refractive index" means a value measured at a wavelength of 587.6 nm (D-line).

A resin composition with excellent transparency and impact strength can be obtained by adding the multilayered polymer particle (a) of the present invention in the step of mixing the methacrylic resin (A) and the block copolymer (b) and kneading the resulting mixture. The methacrylic resin (A), the multilayered polymer particle (a), and the block copolymer (b) can be mixed by the following four methods, any of which may be selected:

(i) a two-step mixing step in which the methacrylic resin (A) and the multilayered polymer particle (a) are first mixed, and then the block copolymer (b) is mixed into the mixture of (A) + (a);
(ii) a two-step mixing method in which the methacrylic resin (A) and the block copolymer (b) are first mixed, and then the multilayered polymer particle (a) is mixed into the mixture of (A) + (b);
(iii) a two-step mixing method in which the multilayered polymer particle (a) and the block copolymer (b) are first mixed, and then the methacrylic resin (A) is mixed into the mixture of (a) + (b); and
(iv) a one-step mixing method in which the methacrylic resin (A), the multilayered polymer particle (a), and the block copolymer (b) are mixed in one step.

The kneading method can be carried out according to known methods, such as kneading using a batch kneader such as a Banbury mixer, a pressure kneader, or a Brabender plastograph, or a continuous kneader such as a single-screw extruder, a twin-screw extruder, or a multi-screw extruder. Alternatively, after a highly concentrated master pellet has been produced by the above method, the pellet is diluted and the diluted product can be melt-kneaded. From the viewpoint of productivity, the single-screw method or the biaxial-screw method is preferable. In particular, single-screw extruders are preferred because of their low shear energy given to the resin composition. The low shear energy prevents agglomerates of the multilayered polymer particles (a) from being completely redistributed and facilitates non-uniform dispersion of the multilayered polymer particle (a). In addition, the low shear energy also reduces thermal decomposition of the polymer.

Rubber content

In the methacrylic resin composition of the present invention, the total amount (total rubber content) of the rubber component layer (aI) of the multilayered polymer particle (a) and the acrylic polymer block (bI) of the block copolymer (b) is in the range of 5 to 45 mass%, preferably 6 to 40 mass%, and more preferably 7 to 30 mass%. If the total rubber content of (aI) and (bI) is less than 5 mass%, the impact strength deteriorates. If the total rubber content of (aI) and (bI) is more than 45 mass%, the stiffness deteriorates.

bI rubber ratio

In the methacrylic resin composition of the present invention, the ratio of the content of the acrylic polymer block (bI) to the rubber content ((aI) + (bI)) is in the range of 5 to 90 mass%, preferably in the range of 10 to 85 mass%, and more preferably in the range of 15 to 80 mass%. When the ratio of the content of the acrylic polymer block (bI) to the rubber content ((aI)+(bI)) is in the range of 5 to 90 mass%, the multilayered polymer particle and the block copolymer act in synergy with each other to achieve excellent impact strength.

Optional components

The thermoplastic resin composition of the present invention may contain other polymers as required, in addition to the methacrylic resin (A) and rubber elastomer (B), as long as the effect of the present invention is not impaired. Examples of such other polymers include the following: olefin resins such as polyethylene, polypropylene, polybutene-1, poly-4-methylpentene-1, and polynorbornene; ethylene ionomers; styrene resins such as polystyrene, styrene-maleic anhydride copolymers, high-impact polystyrene, AS resin, ABS resin, AES resin, AAS resin, ACS resin, and MBS resin; methyl methacrylate-styrene copolymers; ester resins such as polyethylene terephthalate and polybutylene terephthalate; amide resins such as nylon 6, nylon 66, and polyamide elastomers; other thermoplastic resins such as polyphenylene sulfide, polyether ether ketone, polysulfone, polyphenylene oxide, polyimide, polyetherimide, polycarbonate, polyvinyl chloride, polyvinylidene chloride, polyvinylidene fluoride, polyvinyl alcohol, ethylene-vinyl alcohol copolymers, polyacetal, and phenoxy resins; thermosetting resins such as phenolic resins, melamine resins, silicone resins, and epoxy resins; polyurethane; modified polyphenylene ether; siliconemodified resins; acrylic rubber and silicone rubber; styrene thermoplastic elastomers such as SEPS, SEBS, and SIS; and olefin rubbers such as IR, EPR, and EPDM. Such additional polymers can be used singly or in a combination of two or more.

The methacrylic resin composition of the present invention may contain various additives, if necessary. Examples of the additives include antioxidants, thermal degradation inhibitors, ultraviolet absorbers, light stabilizers, lubricants, mold release agents, polymer processing aids, antistatic agents, flame retardants, dyes or pigments, light diffusing agents, delusterants, agglutination inhibitors, impact resistance modifiers, phosphors. The contents of such additives can be appropriately set without impairing the advantageous effects of the present invention. For example, preferably, the content of the antioxidant is 0.01 to 1 part by mass, the content of the ultraviolet absorber is 0.01 to 3 parts by mass, the content of the light stabilizer is 0.01 to 3 parts by mass, the content of the lubricant is 0.01 to 3 parts by mass, the content of the dye or pigment is 0.01 to 3 parts by mass, and the content of the agglutination inhibitor is 0.001 to 1 parts by mass, with respect to 100 parts by mass of the thermoplastic resin composition. Other additives can also be added in an amount of 0.01 to 3 parts by mass.

The antioxidant in itself is effective for preventing the oxidation degradation of resins in the presence of oxygen. Examples of antioxidants include phosphorus-based antioxidants, phenolic antioxidants, sulfur-based antioxidants, amine-based antioxydants. Among these, phosphorus-based antioxidants and phenolic antioxidants are preferred, and use of a phenolic antioxidant alone or combined use of a phosphorus-based antioxidant and a phenolic antioxidant is more preferred, from the viewpoint of an effect of preventing degradation of optical characteristics due to staining. When the phosphorus-based antioxidant and the phenolic antioxidant are used in combination, the molar ratio of the phosphorus-based antioxidant/phenolic antioxidant is preferably in the range of 0.2/1 to 2/1, and more preferably 0.5/1 to 1/1.

Preferred examples of phosphorus-based antioxidants include 2,2-methylenebis(4,6-d-t-butylphenyl)octyl phosphite (ADK STAB HP-10 manufactured by ADEKA Corp.), tris(2,4-di-t-butylphenyl)phosphite (IRGAFOS 168 manufactured by BASF Japan Ltd.), 3,9-bis(2,6-di-t-butyl-4-methylphenoxy)-2,4,8,10-tetraoxa-3,9-diphosphaspiro [5.5]undecane (ADK STAB PEP-36 manufactured by ADEKA Corp.).

Preferred examples of phenolic antioxidants include pentaerythrityl-tetrakis[3-(3,5-di-t-butyl-4-hydroxyphenyl) propionate] (IRGANOX 1010 manufactured by BASF Japan Ltd.) and octadecyl-3-(3,5-di-t-butyl-4-hydroxyphenyl) propionate (IRGANOX 1076 manufactured by BASF Japan Ltd.) .

Preferred examples of sulfur antioxidants include dilauryl 3,3'-thiodipropionate, distearyl 3,3'-thiodipropionate, pentaerythritol tetrakis(3-laurylthiopropionate.

Preferable examples of the amine antioxidant include octylated diphenylamine.

The thermal degradation inhibitor is a compound that prevents thermal degradation of a resin by scavenging polymer radicals generated upon exposure to a high temperature under substantially oxygen-free conditions. Preferred examples of the thermal degradation inhibitor include 2-t-butyl-6-(3'-t-butyl-5'-methyl-hydroxybenzyl)-4-methylphenylacrylate (Sumilizer GM manufactured by Sumitomo Chemical Co., Ltd.) and 2,4-di-t-amyl-6-(3',5'-di-t-amyl-2'-hydroxy-α-methylbenzyl)phenylacrylate (Sumilizer GS manufactured by Sumitomo Chemical Co., Ltd.).

The ultraviolet absorber is a compound considered to have ability to absorb ultraviolet rays and having the function of mainly converting light energy to heat energy. Examples of the ultraviolet absorber include benzophenones, benzotriazoles, triazines, benzoates, salicylates, cyano acrylates, oxalic anilides, malonic acid esters and formamidines. Among these, benzotriazoles and triazines are preferred. Such ultraviolet absorbers can be used singly or in a combination of two or more.

The benzotriazoles are highly effective for inhibiting reduction of optical characteristics, such as staining, due to ultraviolet irradiation and are therefore suitable in the case of applying the thermoplastic resin composition of the present invention to an optical purpose. Preferred examples of benzotriazoles include 4-methyl-2-(2H-benzotriazol-2-yl)phenol (trade name JF-77, manufactured by Johoku Chemical Co., Ltd.), 2-(2H-benzotriazol-2-yl)-4-(1,1,3,3-tetramethylbutyl) phenol (trade name TINUVIN 329, manufactured by BASF Japan Ltd.), 2-(2H-benzotriazol-2-yl)-4,6-bis(1-methyl-1-phenylethyl)phenol (trade name TINUVIN 234, manufactured by BASF Japan Ltd.), 2,2'-methylenebis[6-(2H-benzotriazol-2-yl)-4-t-octylphenol] (ADK STAB LA-31, manufactured by ADEKA Corp.

Triazine ultraviolet absorbers are preferably used when efficient absorption of a wavelength around 380 nm is desired. Examples of such ultraviolet absorbers include 2,4,6-tris(2-hydroxy-4-hexyloxy-3-methylphenyl)-1,3,5-triazine (ADK STAB LA-F70, manufactured by ADEKA Corp.), and its analog hydroxyphenyltriazine-based ultraviolet absorbers (TINUVIN 477 and TINUVIN 460, manufactured by BASF Japan Ltd.

The light stabilizer is a compound considered to have the function of mainly scavenging radicals generated by oxidation due to light. Preferred examples of the light stabilizer include hindered amines such as compounds having a 2,2,6,6-tetraalkylpiperidine backbone. Examples include bis(2,2,6,6-tetramethyl-4-piperidyl)sebacate (ADK STAB LA-77Y, manufactured by ADEKA Corp.).

The lubricant is a compound considered to be effective for improving mold release properties, processability, etc. by adjusting the lubricity between a resin and a metal surface and preventing adhesion or sticking. Examples of lubricants include higher alcohols, hydrocarbons, fatty acids, fatty acid metal salts, aliphatic amides, fatty acid esters, and the like. Among these, aliphatic monohydric alcohols having 12 to 18 carbon atoms and aliphatic amides are preferred, and aliphatic amides are more preferred, from the viewpoint of compatibility with the thermoplastic resin composition of the present invention. The aliphatic amides are classified into saturated aliphatic amides and unsaturated aliphatic amides. Unsaturated aliphatic amides are more preferred because a slipping effect based on the prevention of sticking is expected. Examples of unsaturated aliphatic amides include N,N'-ethylenebisoleic acid amide (SLIPAX O, manufactured by Nippon Kasei Co., Ltd.) and N,N'-dioleyladipic acid amide (SLIPAX ZOA, manufactured by Nippon Kasei Co., Ltd.).

Examples of release agents include higher alcohols, such as cetyl alcohol and stearyl alcohol; glycerin higher fatty acid esters, such as stearic acid monoglyceride and stearic acid diglyceride; and the like. In the present invention, it is preferable to use a higher alcohol and a glycerin fatty acid monoester in combination as a release agent. When a higher alcohol and a glycerin fatty acid monoester are used in combination, the mass ratio of the higher alcohol to the glycerin fatty acid monoester is preferably in the range of 2.5/1 to 3.5/1, and more preferably 2.8/1 to 3.2/1.

Polymer processing aids are compounds that are effective in achieving thickness accuracy and thinness of the obtained film when a methacrylic resin composition is molded. Polymer processing aids are usually polymer particles having a particle size of 0.05 to 0.5 $\mu$m, which can be produced by emulsion polymerization.

Examples of antistatic agents include alkyl sulfonates such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate.

Examples of flame retardants include metal hydrates having hydroxyl groups or crystalline water, such as magnesium hydroxide, aluminium hydroxide, aluminium hydrated silicate, magnesium hydrated silicate, and hydrotalcite; phosphoric acid compounds, such as polyphosphoric amine and phosphoric acid esters; silicon compounds. Phosphoric acid ester flame retardants, such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixilenyl phosphate, dimethyl ethyl phosphate, methyl dibutyl phosphate, ethyl dipropyl phosphate, and hydroxyphenyl diphenyl phosphate are preferred.

Examples of dyes and pigments include red organic pigments, such as Para Red, Fire Red, pyrazolone red, thioindico red, and perylene red; blue organic pigments, such as cyanine blue and indanthrene blue; and green organic pigments, such as cyanine green and naphthol green. These pigments can be used singly or in a combination with two or more.

Examples of light-diffusing agents and matting agents include glass microparticles, polysiloxane-based crosslinked microparticles, crosslinked-polymer microparticles, talc, calcium carbonate, barium sulfate, and the like. The copolymer of the present invention preferably does not contain any acid generator.

Examples of agglutination inhibitors include fatty acids, such as stearic acid and palmitic acid; fatty acid metal salts, such as calcium stearate, zinc stearate, magnesium stearate, potassium palmitate, and sodium palmitate; waxes, such as polyethylene wax, polypropylene wax, and montanic acid wax; low-molecular-weight polyolefins, such as low molecular weight polyethylene and low molecular weight polypropylene; acrylic resin powder; polyorganosiloxane, such as dimethylpolysiloxane; amide resin powders, such as octadecylamine, alkyl phosphate, fatty acid esters, and ethylene bis-stearylamide; fluororesin powders such as ethylene tetrafluoride resins; and molybdenum disulfide powder, silicone resin powder, silicone rubber powder, silica.

Examples of impact modifiers include core-shell modifiers containing diene rubber as a core layer component; modifiers containing multiple rubber particles; and the like.

Examples of phosphors include fluorescent pigments, fluorescent dyes, fluorescent white dyes, fluorescent whitening agents, fluorescent bleaching agents.

When the methacrylic resin composition of the present invention contains one or more additional polymers and/or additives, these components may be added during polymerization of the methacrylic resin (A) and/or the rubber elastomer (B) (the multilayered polymer particle (A) and/or the block copolymer (B)), or may be added during or after mixing of the methacrylic resin particle (A) and/or the rubber elastomer (B) (the multilayered polymer particle (A) and/or the block copolymer (B)).

Examples of the method for molding the resin composition of the present invention include conventionally known melt-heat molding or solution-casting methods, such as injection molding, compression molding, extrusion molding, vacuum molding, and blow molding, to form a molded article. Since the molding force applied to the flowable methacrylic resin composition and its distribution vary depending on the molding method, the molding method affects the dispersibility of the multilayered polymer particle (a). In contrast to methods such as compression molding, vacuum molding, and blow molding, in which the compression force of the mold and the fluid pressure act directly as a molding force to deform the methacrylic resin composition, methods such as injection molding and extrusion molding, in which the shape of the cavity and die is transferred to the methacrylic resin composition by a partial force (resin pressure) that is produced by allowing the force applied to the material in the injection hole to propagate through the material, the molding force is transmitted through the methacrylic resin composition, and thus the molding force tends to be non-uniform. Since the multilayered polymer particle (a) contained in the methacrylic resin composition also tends to be dispersed non-uniformly, methods such as injection molding and extrusion molding are preferred.

The methacrylic resin composition of the present invention is also useful as a film. The methacrylic resin composition of the present invention is well processed, for example, by a usual melt extrusion method, such as inflation, T-die extrusion, or calendering, or even solution casting. If necessary, it is also possible to obtain a film with excellent surface properties by simultaneously bringing both sides of the film into contact with a roll or a metal belt, in particular, by simultaneously bringing both sides of the film into contact with a roll or a metal belt heated to the glass transition temperature or higher. It is also possible to modify the film in accordance with the purpose by subjecting the film to laminate molding or biaxial stretching.

The film obtained from the methacrylic resin composition of the present invention can be used by laminating the film onto metal or plastic. Examples of lamination methods include wet lamination in which an adhesive is applied to a metal plate, such as a steel plate, and then the film is placed on the metal plate and dried so as to bond the film and the metal plate together, or dry lamination, extrusion lamination, hot melt lamination, and the like.

Examples of methods for laminating the film onto a plastic part include film insert molding or laminate injection press molding in which the film is placed in a mold and then a resin is injected into the mold; film in-mold molding in which a film previously molded is placed in a mold and then a resin is injected into the mold.

The methacrylic resin composition of the present invention and molded articles comprising the resin composition can be used as parts for various applications. Examples of specific applications include the following: sign parts and marking films such as for advertising pillars, stand signs, side signs, transom signs, and roof signs; display parts such as for showcases, partition panels, and store displays; illumination parts such as for fluorescent lamp covers, mood lighting covers, lamp shades, luminous ceilings, luminous walls, and chandeliers; interior parts such as for furniture, pendants, and mirrors; architectural parts such as for doors, domes, safety window glass, partitions, stair baseboards, balcony baseboards, and leisure building roofs; transportation-related parts such as for airplane windshields, pilot visors, motorcycle and motorboat windshields, bus sun visors, automobile side visors, rear visors, head wings, headlight covers, sunroofs, glazing, interior automobile parts, and exterior automobile parts such as for bumpers; electronic equipment parts such as for face plates for audiovisual equipment, stereo covers, television protection masks, vending machines, cellular phones, and computers; medical equipment parts such as for incubators and X-ray parts; instrument parts such as for machine covers, instrument covers, experiment devices, rulers, dials, and observation windows; optics parts such as for liquid crystal protection plates, light guide plates, light guide films, Fresnel lenses, lenticular lenses, various display front panels, and diffusion boards; traffic parts such as for road signs, direction boards, mirrors on curved roads, and sound-insulating walls; in addition, greenhouses, large water tanks, box water tanks, bathroom parts, clock panels, bathtubs, sanitary articles, desk mats, recreational device parts, toys, welding face protection masks, solar cell back sheets, and flexible-solar-cell back sheets; and surface materials such as for computers, cellular phones, furniture, vending machines, and bathroom parts.

Laminates of the film obtained using the methacrylic resin film of the present invention can be used for interior or exterior materials for automobiles, daily goods, wallpaper, painting alternatives, housings for furniture and electric devices, housings for office equipment such as fax machines, floor materials, parts of electric or electronic devices, bathroom equipment.

As explained above, the methacrylic resin composition of the present invention comprises a methacrylic resin (A) and a rubber elastomer (B). Since the rubber elastomer (B) contains a multilayered polymer particle (a) and a block copolymer (b) and the multilayered polymer particle (a) and the block copolymer (b) are dispersed in a matrix of the methacrylic resin (A) in a specific dispersed state, a highly synergetic effect is provided whereby impact strength of the methacrylic resin can be effectively increased even with a small rubber content. Therefore, the methacrylic resin composition of the present invention can provide a molded article and a film with excellent impact strength, optical performance, and mechanical performance.

Since the methacrylic resin composition of the present invention has excellent impact strength due to a specific dispersed state of the multilayered polymer particle (a) and the block copolymer (b) in a matrix of the methacrylic resin (A), the methacrylic resin composition can be preferably produced by a method such as injection molding, melt extrusion, or solution casting to achieve such a dispersion state.

Examples

The following describes Production Examples, Examples, and Comparative Examples of the present invention.

Evaluation Item and Evaluation Method

The evaluation items and evaluation methods in the Production Examples, Examples, and Comparative Examples are as described below.

Weight Average Molecular Weight (Mw) and Molecular Weight Distribution (Mw/Mn)

The weight average molecular weight (Mw) and molecular weight distribution (Mw/Mn) of resin were determined by GPC (gel permeation chromatography). The eluent for use was tetrahydrofuran. The column for use was formed by connecting two TSKgel SuperMultipore HZM-M columns (Tosoh Corporation) with a SuperHZ4000 column in series. The GPC system for use was a HLC-8320 (model number, Tosoh Corporation) equipped with a differential refractive-index detector (RI detector). 4 mg of a target resin for measurement was dissolved in 5 ml of tetrahydrofuran to prepare a sample solution. The column oven was set to a temperature of 40°C, and 20 $\mu$l of the sample solution was injected into the system at an eluent flow rate of 0.35 ml/minute, thereby obtaining a chromatogram. A polystyrene standard having a molecular weight within the range of 400 to 5,000,000 was measured by GPC at 10 points to create a calibration curve showing a relation between the retention time and the molecular weight. Based on this calibration curve, the Mw and Mw/Mn of the target resin for measurement were determined.

Regarding the multilayered polymer particles (a), a dried product of multilayered polymer particles was immersed in acetone for 24 hours, and the acetone solution was centrifuged to be separated into acetone-insoluble matter and acetone-soluble matter, followed by measuring the Mw and Mw/Mn of the solidified acetone-soluble matter (the hard resin component layer (aII) of the outermost layer).

The acrylic polymer block (rubber component, bI) and methacrylic polymer block (hard resin component, bII) of the block copolymer (b) were each measured for their weight average molecular weight Mw (bI) and Mw (bII) in the procedure described below.

A sample of a polymer contained in a reaction mixture of a polymerized methacrylic polymer block (hard resin component, bII) was collected to measure Mw, and thus the Mw (bII) was determined. Subsequently, a sample of a polymer contained in a reaction mixture of a polymerized acrylic polymer block (rubber component, bI) was collected to measure Mw, and the Mw (bI) was determined by subtracting the Mw (bII). A further polymerized methacrylic polymer block and a further polymerized acrylic polymer block were also measured for their Mw according to the same procedure, and the total Mw of each polymer block was referred to as "Mw (bI)" and "Mw (bII)."

Volume Average Particle Size

The volume average particle size of latex containing multilayered polymer particles was determined with a LA-950V2 laser diffraction-scattering particle-size distribution analyzer (Horiba, Ltd.) by a light scattering method. The volume average particle size (de) up to the rubber component layer (aI) was determined by sampling latex after polymerizing the rubber component layer. The volume average particle size up to the outermost layer was determined by sampling latex after polymerizing the outermost layer.

Volume Fraction

The volume fraction (core layer + intermediate layer) ($\phi$) up to the outermost rubber component layer of the multilayered polymer particle was calculated from the mass of each layer and the average density of each layer.

Copolymerization Formulation

Analysis was performed under the following conditions with nuclear magnetic resonance spectra ($^1$H-NMR spectra). Device: JNM-LA400 nuclear magnetic resonator (JEOL Ltd.) Deuterated Solvent: Deuterated chloroform

Total Light Transmittance and Haze

The total light transmittance and haze of an injection-molded or press-molded sample were measured with a spectrophotometer (SE5000, Nippon Denshoku Industries Co., Ltd.) in accordance with JIS-K7361.

Flexural Modulus

An injection-molded or press-molded sample was folded at 3 points at 23°C in accordance with JIS-K7171 by using an autograph (Shimadzu Corporation), and the flexural modulus (MPa) was measured.

Charpy Impact Value

The impact value (without a notch) of an injection-molded or press-molded sample was measured at a temperature of 23°C and a relative humidity of 50% by a method in accordance with JIS-K7111. Measurement was performed 10 times, and the average was determined to be a Charpy impact value.

Dispersibility of Multilayered Polymer Particles (a)

An injection-molded or press-molded sample was cut to a 90-nm thin film section with a microtome at -100°C. This thin section was stained with ruthenium tetroxide and photographed with a transmission electron microscope (HT7700, Hitachi High-Tech Corporation) at an accelerating voltage of 100 KV.

The dispersibility of the multilayered polymer particles (a) was examined as follows. At least 20 multilayered polymer particles, whose cross-section was observable in an electronic microscope photograph as shown in Fig. 1, were measured in the following procedure. The distance from the surface of the outermost layer of the stained rubber component layer (aI) of a multilayered polymer particle (a) to the surface of the outermost layer of the rubber component layer (aI) of another closest multilayered polymer particle (a), the cross-section of which was visible, was measured and determined to be Lr. The number of multilayered polymer particles (a) around which at least one other particle satisfies L > Lr was defined as the number of multilayered polymer particles wherein L > Lr. As used here, L represents the theoretical surface-to-surface distance of the rubber component layer of multilayered polymer particles. Lr represents the measured surface-to-surface distance of the rubber component layer of multilayered polymer particles. When the number of the multilayered polymer particles that satisfy L > Lr was 20% or more out of the number of multilayered polymer particles whose Lr was determined, the dispersibility was evaluated as not being uniform. When the number of the multilayered polymer particles that satisfy L > Lr was less than 20%, the dispersibility was evaluated as being uniform.

Mass of Each Layer or Block

The mass of the rubber component layer (aI) and the hard resin component layer (aII) of the multilayered polymer particles (a) was calculated based on the mass of the monomers or monomer mixture because almost all of the monomers underwent reaction. The mass of the acrylic polymer block (bI) and the methacrylic polymer block (bII) of the block copolymer was determined by sampling a reaction mixture at the time of polymerization of each polymer block and measuring it by using a nuclear magnetic resonance spectrum ($^1$H-NMR spectra).

The volume fraction up to the outermost rubber component layer of the multilayered polymer particle (core layer + intermediate layer) ($\phi$) was calculated from the mass of each layer and the average density of each layer.

Starting Materials

The starting materials used in the Examples and Comparative Examples were the following.

Methacrylic Resin (A)

Methacrylic Resin (A-1): A methacrylic copolymer formed of a methyl methacrylate (MMA) unit (content: 99.3 mass%) and a methyl acrylate (MA) unit (content: 0.7 mass%) with Mw = 84,000, and Mw/Mn = 2.1.
Methacrylic Resin (A-2): A methacrylic copolymer formed of a methyl methacrylate (MMA) unit (content: 93.6 mass%) and a methyl acrylate (MA) unit (6.4 mass%) with Mw = 120,000, and Mw/Mn = 2.1.
Methacrylic Resin (A-3): A methacrylic copolymer formed of a methyl methacrylate (MMA) unit (content: 93.6 mass%) and a methyl acrylate (MA) unit (6.4 mass%) with Mw = 200,000, and Mw/Mn = 2.4.

The term "part" refers to parts by mass below.

Rubber Elastomer (B)

Multilayered Polymer Particle (a)

Production Example 1: Multilayered Polymer Particle (Ba-1)

100 parts of ion-exchanged water were placed in a glass-lined reactor equipped with a condenser, a thermometer, and a stirrer, and then 0.019 parts of a surfactant (sodium polyoxyethylene alkyl ether acetate (NIKKOL-ECT-3NEX)) and 0.10 parts of sodium carbonate were added and dissolved. The atmosphere inside the reactor was replaced with nitrogen gas to make it substantially oxygen-free. The reactor was then heated to make the aqueous solution reach 80°C.

0.04 parts of potassium persulfate were added to the aqueous solution, and a mixture c formed of 32.6 parts of methyl methacrylate, 2.1 parts of methyl acrylate, and 0.07 parts of allyl methacrylate was further added over a period of 50 minutes without interruption. After the addition of the mixture c was completed, the resulting mixture was maintained for 40 minutes, followed by emulsion polymerization, thereby obtaining a latex c.

Subsequently, 0.05 parts of potassium persulfate was added to the latex c, and a mixture i formed of 36.6 parts of butyl acrylate, 7.9 parts of styrene, and 0.89 parts of allyl methacrylate was further added over a period of 60 minutes without interruption. After the addition of the mixture i was completed, the resulting mixture was maintained for 90 minutes, followed by seeded emulsion polymerization, thereby obtaining a latex i.

Subsequently, 0.02 parts of potassium persulfate was added to the latex i, and a mixture o formed of 18.6 parts of methyl methacrylate, 1.2 parts of methyl acrylate, and 0.04 parts of n-octyl mercaptan was further added over a period of 30 minutes without interruption. After the addition of the mixture o was completed, the resulting mixture was maintained for 60 minutes, followed by seeded emulsion polymerization, thereby obtaining a latex I-1. After the latex I-1 was placed in a vessel equipped with a stirrer and mixed, an aqueous solution of magnesium sulfate was added, and the mixture was salted out and solidified. The solidified product was washed with water and dehydrated, followed by drying, thereby obtaining multilayered polymer particles (a-1).

Production Example 2: Multilayered Polymer Particle (Ba-2)

100 parts of ion-exchanged water was placed in a glass-lined reactor equipped with a condenser, a thermometer, and a stirrer, and then 0.019 parts of a surfactant (pelex SS-H, Kao Corporation) and 0.5 parts of sodium carbonate were added and dissolved. The atmosphere inside the reactor was replaced with nitrogen gas to make it substantially oxygen-free. The reactor was then heated to make the aqueous solution reach 80°C.

0.02 parts of potassium persulfate was added to the aqueous solution, and a mixture c formed of 9.4 parts of methyl methacrylate, 0.6 parts of methyl acrylate, and 0.02 parts of allyl methacrylate was further added over a period of 20 minutes without interruption. After the addition of the mixture c was completed, the resulting mixture was maintained for 30 minutes, followed by emulsion polymerization, thereby obtaining a latex c.

Subsequently, 0.07 parts of potassium persulfate was added to the latex c, and a mixture i formed of 41.1 parts of butyl acrylate, 8.9 parts of styrene, and 2.0 parts of allyl methacrylate was added over a period of 80 minutes without interruption. After the addition of the mixture i was completed, the resulting mixture was maintained for 60 minutes, followed by seeded emulsion polymerization, thereby obtaining a latex i.

Subsequently, a mixture o formed of 37.6 parts of methyl methacrylate, 2.4 parts of methyl acrylate, and 0.12 parts of n-octyl mercaptan was further added to the latex I over a period of 60 minutes without interruption. After the addition of the mixture o was completed, the resulting mixture was maintained for 60 minutes, followed by seeded emulsion polymerization, thereby obtaining a latex I-2. After the latex I-2 was placed in a vessel equipped with a stirrer and mixed, an aqueous solution of magnesium sulfate was added, and the mixture was salted out and solidified. The solidified product was washed with water and dehydrated, followed by drying, thereby obtaining multilayered polymer particles (a-2). Table 1 shows the physical properties of multilayered polymer particles (a-2).

Production Example 3: Multilayered Polymer Particles (Ba-3)

150 parts by mass of distilled water, 1.3 parts by mass of an emulsifier (Neopelex G-15, Kao Corporation), and 1.0 part by mass of a dispersant (Poiz 520, Kao Corporation) were placed in a polymerizer equipped with a stirring blade, a cooling tube, and a dropping funnel in a nitrogen atmosphere, and heated to 80°C to homogeneously dissolve these materials. Subsequently, 0.05 parts by mass of potassium peroxydisulfate were added at the same temperature, and a mixture formed of 41.25 parts by mass of n-butyl acrylate (BA) (acrylic acid ester monomer), 8.75 parts by mass of styrene (St) (additional monofunctional monomer), 0.3 parts by mass of allyl methacrylate (ALMA) (polyfunctional monomer), and 0.25 parts by mass of a surfactant (Adeka Col CS-141E, Adeka Corporation) was added dropwise through a dropping funnel over a period of 60 minutes to form the first layer (layer (Ia)). After completion of the dropwise addition, the reaction of the mixture was further continued at 80°C for 1 hour, and gas chromatography was performed to confirm the consumption of at least 99% of each monomer.

Subsequently, 0.02 parts by mass of potassium peroxydisulfate were added to the obtained copolymer latex, and then a mixture formed of 15.81 parts by mass of n-butyl acrylate (BA) (acrylic acid ester monomer), 3.19 parts by mass of styrene (St) (additional monofunctional monomer), 1.0 part by mass of methyl methacrylate (MMA) (additional monofunctional monomer), 0.16 parts by mass of allyl methacrylate (ALMA) (polyfunctional monomer), and 0.1 parts by mass of a surfactant (Adeka Col CS-141E) was added dropwise through a dropping funnel over a period of 40 minutes to form the second layer (layer (Ib)). After completion of the dropwise addition, the reaction of the mixture was further continued at 80°C for 1 hour, and gas chromatography was performed to confirm the consumption of at least 99% of each monomer.

Subsequently, 0.03 parts by mass of potassium peroxydisulfate were added to the obtained copolymer latex, and then a mixture formed of 28.5 parts by mass of methyl methacrylate (MMA) (methacrylic acid ester monomer), 1.5 parts by mass of methyl acrylate (MA) (additional monomer), 0.3 parts by mass of n-octyl mercaptan, and 0.15 parts by mass of a surfactant (Adeka Col CS-141E) was added dropwise through a dropping funnel over a period of 40 minutes to form the third layer (layer (II)). After completion of the dropwise addition, the reaction of the mixture was further continued at 80°C for 1 hour, and gas chromatography was performed to confirm the consumption of at least 99.9% of each monomer.

After the obtained latex was placed in a vessel equipped with a stirrer and mixed, an aqueous solution of magnesium sulfate was added thereto, and the mixture was salted out and solidified. The solidified product was washed with water and dehydrated, followed by drying, thereby obtaining multilayered polymer particles (a-3). Table 1 shows the physical properties of the multilayered polymer particles (a-3).

Block Copolymer (b)

Block copolymer (Bb-1): A diblock copolymer formed of [a methyl methacrylate (MMA) polymer block (bII)]-[an n-butyl acrylate (BA)-benzyl acrylate (BzA) copolymer block (bI)], with a weight average molecular weight (Mw) of 90,000, a mass ratio of the polymer blocks (bII): (bI) of 50:50, a mass ratio of the monomers (MMA:BA:BzA) of 50:36:14, Mw (b1) = 45,000, and Mw (b2) = 45,000. Block Copolymer (Bb-2): A diblock copolymer formed of [a methyl methacrylate (MMA) polymer block (bII)]-[an n-butyl acrylate (BA) copolymer block (bI)] with a weight average molecular weight (Mw) of 120,000, a mass ratio of the polymer blocks (bII): (bI) of 50:50, a mass ratio of the monomers (MMA:BA) of 50:50, Mw (b1) = 60,000, and Mw (b2) = 60,000.
Block Copolymer (Bb-3): A triblock copolymer formed of [a methyl methacrylate (MMA) polymer block (bII)]-[an n-butyl acrylate (BA) polymer block (bI)]-[a methyl methacrylate (MMA) polymer block (bII)] with a weight average molecular weight (Mw) of 67,000, a mass ratio of the polymer blocks (bII): (bI) : (bII) of 17.0:50.0:33.0, a mass ratio of the monomers (MMA:BA) of 50:50, Mw (b1) = 33,500, and Mw (b2) = 33,500.

Example 1

78.9 parts by mass of the methacrylic resin (A-1), 8.1 parts by mass of the multilayered polymer particles (Ba-1), and 13.0 parts by mass of the block copolymer (Bb-1) were molten and kneaded with a single-screw extruder (diameter: 40 mm) at a cylinder temperature of 230 to 250°C. The molten resin composition was then extruded to obtain a methacrylic resin composition (R1) in a pellet form, followed by drying the composition at 80°C for 24 hours.

The methacrylic resin composition (R1) was injected into a mold for a JIS test specimen at a filling rate of 50 mm/s to obtain a molded article of 10 mm × 80 mm × 4 mm, and a molded article of 50 mm × 50 mm × 3 mm with an injection molding machine set to a cylinder temperature of 250°C and a mold temperature of 50°C (M-100C, Meiki Co., Ltd.). Table 2 shows the evaluation results of the physical properties, and Fig. 1 shows a transmission electron microscope photograph. In Fig. 1, the number of multilayered polymer particles (a) that satisfied L > Lr was 51%.

Examples 2 to 9

Thermoplastic methacrylic resin compositions (R2) to (R9) were obtained in the same manner as in Example 1 except that the formulation was changed as shown in Table 2. In Examples 2 to 9, molded articles were obtained from the obtained resin compositions in the same manner as in Example 1. Table 2 shows the evaluation results of the physical properties of each Example.

Comparative Examples 1 to 5

Methacrylic resin compositions (R10) to (R14) were obtained in the same manner as in Example 1 except that the formulation was changed as shown in Table 2. In Comparative Examples 1 to 5, molded articles were obtained from the obtained resin compositions in the same manner as in Example 1. Table 2 shows the evaluation results of the physical properties of each Comparative Example.

Comparative Examples 6 to 10

Methacrylic resin compositions (R15) to (R19) were obtained in the same manner as in Example 1 except that the formulation was changed as shown in Table 2.

Molded articles were obtained from the methacrylic resin compositions (R15), (R16), (R18), and (R19) by injection molding in the same manner as in Example 1 except that the methacrylic resin compositions (R15), (R16), (R18), and (R19) were molten and kneaded with a twin-screw extruder. Molded articles with a thickness of 3 mm and 4 mm were obtained from the methacrylic resin composition (R17) by melting and kneading the methacrylic resin composition (R17) with a single-screw extruder and then press-molding it with a hydraulic molding machine set to 230°C (Toho Machinery K.K.). The obtained molded articles were cut with a running saw, and the end portions were polished, thereby obtaining molded articles (10 mm × 80 mm × 4 mm, and 50 mm × 50 mm × 3 mm). Table 2 shows the evaluation results of the physical properties.

Table 1

| | | Production Example 1 | Production Example 2 | Production Example 3 |
| --- | --- | --- | --- | --- |
| | | Multilayered Polymer Particles (Ba-1) | Multilayered Polymer Particles (Ba-2) | Multilayered Polymer Particles (Ba-3) |
| Layer Composition | First Layer (Hard Resin Component Layer (aII) Core Layer) (Mass Ratio) | MMA/MA/ALMA (94/6/0.2) | MMA/MA/ALMA (94/6/0.2) | BA/St/ALMA (82.5/17.5/0.6) |
| | Second Layer (Rubber Component Layer (aI) Intermediate Layer) (Mass Ratio) | BA/St/ALMA (82/18/2) | BA/St/ALMA (82/18/2) | BA/St/MMA/ALMA (79.0/16.0/5.0/0.8) |
| | Third Layer (Hard Resin Component Layer (aII) Outermost Layer) (Mass Ratio) | MMA/MA (95.0/5.0) | MMA/MA (95.0/5.0) | MMA/MA (95.0/5.0) |
| Layer Ratio Layer (Ia)/Layer (Ib)/Layer (II) (Mass Ratio) | | 35/45/20 | 10/50/40 | 50/20/30 |
| Weight Average Molecular Weight of Outermost Layer | | 62000 | 63000 | 30000 |
| de: Volume Average Particle Size (Second Layer) (μm) | | 0.21 | 0.09 | 0.09 |
| Volume Average Particle Size (Third Layer) (μm) | | 0.23 | 0.11 | 0.10 |

Table 2

| | | | Example 1 | Example 2 | Example 3 | Example 4 | Example 5 | Example 6 | Example 7 | Example 8 | Example 9 |
|---|---|---|---|---|---|---|---|---|---|---|---|---|
| | | | R1 | R2 | R3 | R4 | R5 | R6 | R7 | R8 | R9 |
| Formulation Ratio of Methacrylic Resin Composition | Methacrylic Resin (A) | A-1 | 78.9 | 85.3 | 85.3 | 85.3 | 76.3 | 71.3 | 74.0 | | |
| | | A-2 | | | | | | | | 85.3 | |
| | | A-3 | | | | | | | | | 85.2 |
| | Rubber Elastomer (B) | Multilayered Polymer Particles (a) — Ba-1 | 8.1 | 8.8 | 8.8 | 8.8 | 8.8 | 8.8 | 20.0 | 8.8 | 8.8 |
| | | Ba-2 | | | | | | | | | |
| | | Ba-3 | | | | | | | | | |
| | | Block Copolymer (b) — Bb-1 | 13.0 | | 6.0 | | | | | | |
| | | Bb-2 | | | | 6.0 | 15.0 | 20.0 | 6.0 | 6.0 | 6.0 |
| | | Bb-3 | | 6.0 | | | | | | | |
| Rubber Content in Methacrylic Resin Composition | Rubber Content (al) in Multilayered Polymer Particles (a) (Mass%) | | 3.6 | 3.9 | 3.9 | 3.9 | 3.9 | 3.9 | 9.0 | 3.9 | 3.9 |
| | Rubber Content (bl) in Block Copolymer (b) (Mass%) | | 6.6 | 3.0 | 3.0 | 3.0 | 7.5 | 10.0 | 3.0 | 3.0 | 3.0 |
| | Total Rubber Content (al)+(bl) (Mass%) | | 10.2 | 6.9 | 6.9 | 6.9 | 11.4 | 13.9 | 12.0 | 6.9 | 6.9 |
| | (bl)/((al)+(bl)) (%) | | 64.7 | 43.5 | 43.5 | 43.5 | 65.8 | 71.9 | 25.0 | 43.5 | 43.5 |
| Dispersibility of Multilayered Polymer Particles | Theoretical Surface-to-Surface Distance of (L) of Rubber Component Layer (al) ($\mu$m) | | 0.22 | 0.20 | 0.20 | 0.20 | 0.20 | 0.20 | 0.10 | 0.20 | 0.20 |
| | L/de$^2$ | | 4.99 | 4.54 | 4.54 | 4.54 | 4.54 | 4.54 | 2.27 | 4.54 | 4.54 |
| | Dispersibility of Multilayered Polymer Particles (a) | | Not Uniform | Not Uniform | Not Uniform | Not Uniform | Not Uniform | Not Uniform | Not Uniform | Not Uniform | Not Uniform |
| Physical Properties of Methacrylic Resin Composition | Charpy Impact Test (with No Notch) (KJ/m$^2$) | | 53.9 | 56.8 | 62.4 | 76.5 | 76.1 | 63.2 | 71.4 | 48.7 | 68.7 |
| | Flexural Modulus (MPa) | | 2410.0 | 2560.0 | 2570.0 | 2550.0 | 2230.0 | 2270.0 | 2240.0 | 2640.0 | 2680.0 |
| | Total Light Transmittance (%) | | 92.0 | 93.0 | 93.0 | 93.0 | 92.0 | 91.0 | 93.0 | 93.0 | 93.0 |
| | Haze (%) | | 1.6 | 1.4 | 1.5 | 1.1 | 1.6 | 2.6 | 1.2 | 0.9 | 0.9 |

(continued)

| | | Comparative Example 1 | Comparative Example 2 | Comparative Example 3 | Comparative Example4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| | | R10 | R11 | R12 | R13 | R14 | R15 | R16 | R17 | R18 | R19 |
| Formulation Ratio of Methacrylic Resin Composition | Methacrylic Resin (A) — A-1 | 100.0 | 85.0 | 84.5 | 86.1 | 92.6 | 78.9 | 81.0 | 85.3 | 82.3 | 83.8 |
| | A-2 | | | | | | | | | | |
| | A-3 | | | | | | | | | | |
| | Rubber Elastomer (B) — Multilayered Polymer Particles (a) — Ba-1 | | | 15.1 | 0.8 | | | | 8.8 | 3.8 | 6.3 |
| | Ba-2 | | | | | 7.2 | 7.2 | | | | |
| | Ba-3 | | | | | | | 5.1 | | | |
| | Block Copolymer (b) — Bb-1 | | | 0.4 | 13.1 | 0.2 | 13.9 | 13.9 | | 14.0 | 10.0 |
| | Bb-2 | | 15.0 | | | | | | 6.0 | | |
| | Bb-3 | | | | | | | | | | |
| Rubber Content in Methacrylic Resin Composition | Rubber Content (al) in Multilayered Polymer Particles (a) (Mass%) | | | 6.7 | 0.3 | 3.6 | 3.6 | 3.6 | 3.9 | 1.7 | 2.8 |
| | Rubber Content (bl) in Block Copolymer (b) (Mass%) | | 7.5 | 0.2 | 6.6 | 0.1 | 6.6 | 6.6 | 3.0 | 7.0 | 5.0 |
| | Total Rubber Content (al)+(bl) (Mass%) | 0.0 | 7.5 | 6.9 | 6.9 | 3.7 | 10.2 | 10.2 | 6.9 | 8.7 | 7.8 |
| | (bl)/((al)+(bl)) (%) | 0.0 | 100.0 | 3.0 | 95.0 | 3.0 | 64.7 | 64.7 | 43.5 | 80.6 | 64.2 |
| | Theoretical Surface-to-Surface Distance of (L) of Rubber Component Layer (al) (μm) | - | - | 0.13 | 0.72 | 0.21 | 0.21 | 0.13 | 0.20 | 0.34 | 0.25 |
| | $L/de^2$ | - | - | 2.95 | 16.33 | 25.9 | 25.93 | 16.05 | 4.5 | 7.70 | 5.70 |
| Dispersibility of Multilayered Polymer Particles | Dispersibility of Multilayered Polymer Particles (a) | | | Not Uniform | Not Uniform | Not Uniform | Uniform | Uniform | Uniform | Not Uniform | Not Uniform |
| Physical Properties of Methacrylic Resin Composition | Charpy Impact Test (with No Notch) (KJ/m²) | 21.3 | 24.0 | 39.0 | 23.0 | 22.0 | 24.0 | 26.0 | 24.0 | 29.8 | 31.7 |
| | Flexural Modulus (MPa) | 3450.0 | 2600.0 | 2400.0 | 2750.0 | 2850 | 2500.0 | 2300 | 2600.0 | 2600.0 | 2620.0 |
| | Total Light Transmittance (%) | 93.0 | 93.0 | 93.0 | 93.0 | 93.0 | 92.0 | 92 | 93.0 | 92.0 | 92.0 |
| | Haze (%) | 0.2 | 1.3 | 1.2 | 1.2 | 1.2 | 0.8 | 1.1 | 1.1 | 1.3 | 1.1 |

Discussion

The molded articles obtained from methacrylic resin compositions containing specific methacrylic resin (A), specific multilayered polymer particle (a), and specific block copolymer (b) according to the present invention in Examples 1 to 9 exhibited excellent impact strength while maintaining optical performance and mechanical performance.

In contrast, the molded article obtained in Comparative Example 1, which was formed of the methacrylic resin (A) alone, and the molded article obtained in Comparative Example 2, which was formed of a methacrylic resin composition composed of the methacrylic resin (A) and the block copolymer (b) with no multilayered polymer particles (a) contained, exhibited poor impact strength compared with those in the Examples.

The molded articles obtained in Comparative Examples 3 and 4, which were formed of a methacrylic resin composition having an extremely large or small rubber content in the block copolymer (b) relative to the entire rubber content, exhibited poor impact strength compared with those in the Examples in which the rubber content in the block copolymer (b) was not extremely large or small relative to the entire rubber content.

The molded article obtained in Comparative Example 5, which was formed of a methacrylic resin composition having an extremely small rubber content of the acrylic polymer block (bI) of the block copolymer, exhibited poor impact strength compared with those in the Examples in which the rubber content in the block copolymer (b) was not extremely large or small relative to the entire rubber content.

The molded articles obtained in Comparative Examples 5 to 7, which were formed of a thermoplastic resin composition containing the multilayered polymer particles (Ba-2) or (Ba-3) having a small volume average particle size, and satisfied $L/de^2 \geq 5.5$, exhibited poor impact strength compared with those in the Examples.

The molded articles obtained in Comparative Examples 6 to 8, which were formed of a methacrylic resin composition having multilayered polymer particles dispersed in a methacrylic resin, exhibited poor impact strength compared with those in the Examples in which the rubber content was substantially equivalent to that in Comparative Examples 6 to 8. The molded articles obtained in Comparative Examples 9 and 10, in which $L/de^2 \geq 5.5$, exhibited poor impact strength compared with those in the Examples.

**Claims**

1. A methacrylic resin composition comprising a matrix of a methacrylic resin (A) and a rubber elastomer (B) dispersed in the matrix, the methacrylic resin composition satisfying the following requirements (1) to (8):

   (1) the rubber elastomer (B) comprises a multilayered polymer particle (a) and a block copolymer (b);
   (2) the multilayered polymer particle (a) comprises at least one rubber component layer (aI) and further comprises a hard resin component layer (aII) in the outermost part, wherein the rubber component layer that is the closest to the outermost part has an average particle size of 0.05 to 0.3 μm, and preferably 0.19 to 0.3 μm;
   (3) the rubber component layer (aI) of the multilayered polymer particle (a) is present in an amount of 3 to 20 mass% in the methacrylic resin composition;
   (4) the block copolymer (b) comprises a methacrylic polymer block (bII) and an acrylic polymer block (bI), wherein the acrylic polymer block (bI) is a rubber component;
   (5) the total rubber component content of (aI) and (bI) in the methacrylic resin composition is in the range of 5 to 45 mass%;
   (6) the ratio of the (bI) content to the total rubber component content of (aI) and (bI) in the methacrylic resin composition is in the range of 5 to 90 mass%;
   (7) the weight average molecular weight Mw (bII) of the methacrylic polymer block (bII) of the block copolymer (b), the weight average molecular weight Mw (bI) of the acrylic polymer block (bI) of the block copolymer (b), and the weight average molecular weight Mw (A) of the methacrylic resin (A) satisfy the following formulas (Y) and (Z):

   $$0.5 \leq Mw\ (A)/Mw\ (bII) \leq 2.5 \qquad (Y)$$

   $$5,000 \leq Mw\ (bI) \leq 120,000 \qquad (Z);$$

   and
   (8) 20% or more of the total number of the particles of the multilayered polymer particle (a) satisfy the following formula (V):

   $$L > Lr \qquad (V)$$

wherein L is a theoretical surface-to-surface distance of the rubber component layer of the multilayered polymer particle; and

Lr is a measured surface-to-surface distance of the outermost rubber component layer of the multilayered polymer particle; with the proviso that the theoretical surface-to-surface distance (L) of the rubber component layer of the multilayered polymer particle is calculated from the following formula (X):

$$L = de \times ((\pi/6\varphi)^{1/3} - 1) \quad (X)$$

wherein de is the average particle size of the rubber component layer of the multilayered polymer particle and $\varphi$ is a volume fraction up to the rubber component layer of the multilayered polymer particle;

wherein the weight average molecular weight is determined as described in the description by GPC (gel permeation chromatography) using a polystyrene standard,

wherein the average particle size of the rubber component layer that is the closest to the outermost part and the volume fraction up to the rubber component layer of the multilayered polymer particle are determined as described in the description, and

wherein the surface-to-surface distance of the outermost rubber component layer of the multilayered polymer particle is measured as described below:

the methacrylic resin composition is electronically stained with ruthenium tetroxide and observed under a transmission electron microscope, and the distance from the outermost layer surface of the stained layer (I) of one multilayered polymer particle (a) to the outermost layer surface of the layer (aI) of another multilayered polymer particle (a) is measured to determine Lr.

2.   The methacrylic resin composition according to claim 1, wherein the rubber component layer (aI) of the multilayered polymer particle (a) comprises at least one rubber component layer (aI) that contains a copolymer comprising 50 to 89.99 mass% of an acrylic acid ester monomer unit, 44.99 to 10 mass% of an additional monofunctional monomer unit, and 0.01 to 10 mass% of a polyfunctional monomer; the outermost layer comprises at least one hard resin component layer (aII) comprising 50 to 100 mass% of a methacrylic acid ester monomer unit and 50 to 0 mass% of an additional monomer unit; and the mass ratio (aI/aII) of the total amount of the rubber component layer (aI) to the total amount of the hard resin component layer (aII) is in the range of 30/70 to 90/10.

3.   The methacrylic resin composition according to claim 1 or 2, wherein the acrylic polymer block (bI) of the block copolymer (b) is present in an amount of 3 to 10 mass% in the methacrylic resin composition.

4.   The methacrylic resin composition according to any one of claims 1 to 3, wherein the acrylic polymer block (bI) of the block copolymer (b) is a copolymer block of 50 to 90 mass% of an alkyl ester of acrylic acid and 50 to 10 mass% of an aromatic ester of (meth)acrylic acid.

5.   The methacrylic resin composition according to claim 4, wherein the aromatic ester of (meth)acrylic acid is benzyl acrylate.

6.   The methacrylic resin composition according to any one of claims 1 to 5, wherein the multilayered polymer particle (a) satisfies the following formula (W):

$$L/de^2 \leq 5.5 \quad (W).$$

7.   A molded article comprising the methacrylic resin composition of any one of claims 1 to 6.

8.   The molded article according to claim 7 which is an injection-molded article.

9.   A method for producing a film, the method comprising subjecting the methacrylic resin composition of any one of claims 1 to 6 to melt extrusion or solution casting.

**Patentansprüche**

1.   Methacrylharzzusammensetzung, umfassend eine Matrix eines Methacrylharzes (A) und eines in der Matrix dispergierten Kautschukelastomers (B), wobei die Methacrylharzzusammensetzung die folgenden Anforderungen (1) bis (8) erfüllt:

(1) das Kautschukelastomer (B) umfasst ein mehrschichtiges Polymerteilchen (a) und ein Blockcopolymer (b);
(2) das mehrschichtige Polymerteilchen (a) umfasst mindestens eine Kautschukkomponentenschicht (al) und umfasst weiter eine Hartharzkomponentenschicht (all) in dem äußersten Teil, wobei die Kautschukkomponentenschicht, die dem äußersten Teil am nächsten ist, eine mittlere Teilchengröße von 0,05 bis 0,3 $\mu$m und vorzugsweise von 0,19 bis 0,3 $\mu$m aufweist;
(3) die Kautschukkomponentenschicht (al) des mehrschichtigen Polymerteilchens (a) ist in einer Menge von 3 bis 20 Massen-% in der Methacrylharzzusammensetzung vorhanden;
(4) das Blockcopolymer (b) umfasst einen Methacrylpolymerblock (bII) und einen Acrylpolymerblock (bI), wobei der Acrylpolymerblock (bI) eine Kautschukkomponente ist;
(5) der Kautschukkomponentengesamtgehalt von (al) und (bI) in der Methacrylharzzusammensetzung ist im Bereich von 5 bis 45 Massen-%;
(6) das Verhältnis des (bI)-Gehalts zum Kautschukkomponentengesamtgehalt von (al) und (bI) in der Methacrylharzzusammensetzung ist im Bereich von 5 bis 90 Massen%;
(7) das Molekulargewicht-Gewichtsmittel Mw (bII) des Methacrylpolymerblocks (bII) des Blockcopolymers (b), das Molekulargewicht-Gewichtsmittel Mw (bI) des Acrylpolymerblocks (bI) des Blockcopolymers (b) und das Molekulargewicht-Gewichtsmittel Mw (A) des Methacrylharzes (A) erfüllen die folgenden Formeln (Y) und (Z):

$$0,5 \leq Mw\,(A)/Mw\,(bII) \leq 2,5 \qquad (Y)$$

$$5.000 \leq Mw\,(bI) \leq 120.000 \qquad (Z);$$

und
(8) 20% oder mehr der Gesamtzahl der Teilchen des mehrschichtigen Polymerteilchens (a) erfüllen die folgende Formel (V):

$$L > Lr \quad (V)$$

wobei L ein theoretischer Oberflächen-zu-Oberflächen-Abstand der Kautschukkomponentenschicht des mehrschichtigen Polymerteilchens ist; und
Lr ein gemessener Oberflächen-zu-Oberflächen-Abstand der äußersten Kautschukkomponentenschicht des mehrschichtigen Polymerteilchens ist;
mit der Maßgabe, dass der theoretische Oberflächen-zu-Oberflächen-Abstand (L) der Kautschukkomponentenschicht des mehrschichtigen Polymerteilchens durch die folgende Formel (X) berechnet wird:

$$L = de \times ((\pi/6\varphi)^{1/3}-1) \quad (X)$$

wobei de die mittlere Teilchengröße der Kautschukkomponentenschicht des mehrschichtigen Polymerteilchens ist und $\varphi$ ein Volumenanteil bis zur Kautschukkomponentenschicht des mehrschichtigen Polymerteilchens ist;
wobei das Molekulargewicht-Gewichtsmittel wie in der Beschreibung beschrieben durch GPC (Gelpermeationschromatographie) unter Verwendung eines Polystyrolstandards bestimmt wird,
wobei die mittlere Teilchengröße der Kautschukkomponentenschicht, die dem äußersten Teil am nächsten ist, und der Volumenanteil bis zur Kautschukkomponentenschicht des mehrschichtigen Polymerteilchens wie in der Beschreibung beschrieben bestimmt werden und
wobei der Oberflächen-zu-Oberflächen-Abstand der äußersten Kautschukkomponentenschicht des mehrschichtigen Polymerteilchens wie folgt gemessen wird:
die Methacrylharzzusammensetzung wird elektronisch mit Rutheniumtetroxid angefärbt und unter einem Transmissionselektronenmikroskop betrachtet, und der Abstand von der äußersten Schichtoberfläche der angefärbten Schicht (I) eines mehrschichtigen Polymerteilchens (a) zur äußersten Schichtoberfläche der Schicht (al) eines anderen mehrschichtigen Polymerteilchens (a) wird gemessen, um Lr zu bestimmen.

2. Methacrylharzzusammensetzung nach Anspruch 1, wobei die Kautschukkomponentenschicht (al) des mehrschichtigen Polymerteilchens (a) mindestens eine Kautschukkomponentenschicht (al) umfasst, die ein Copolymer enthält, umfassend 50 bis 89,99 Massen-% einer Acrylsäureestermonomereinheit, 44,99 bis 10 Massen-% einer zusätzlichen monofunktionellen Monomereinheit und 0,01 bis 10 Massen-% eines polyfunktionellen Monomers; die äußerste Schicht mindestens eine Hartharzkomponentenschicht (aII) umfasst, umfassend 50 bis 100 Massen-% einer Methacrylsäureestermonomereinheit und 50 bis 0 Massen-% einer zusätzlichen Monomereinheit; und das Massenverhältnis (aI/aII) der Gesamtmenge der Kautschukkomponentenschicht (aI) zu der Gesamtmenge der Hartharzkomponentenschicht (aII) im Bereich von 30/70 bis 90/10 ist.

3. Methacrylharzzusammensetzung nach Anspruch 1 oder 2, wobei der Acrylpolymerblock (bI) des Blockcopolymers (b) in einer Menge von 3 bis 10 Massen% in der Methacrylharzzusammensetzung vorhanden ist.

4. Methacrylharzzusammensetzung nach einem der Ansprüche 1 bis 3, wobei der Acrylpolymerblock (bI) des Blockcopolymers (b) ein Copolymerblock aus 50 bis 90 Massen-% eines Alkylesters von Acrylsäure und 50 bis 10 Massen-% eines aromatischen Esters von (Meth)acrylsäure ist.

5. Methacrylharzzusammensetzung nach Anspruch 4, wobei der aromatische Ester von (Meth)acrylsäure Benzylacrylat ist.

6. Methacrylharzzusammensetzung nach einem der Ansprüche 1 bis 5, wobei das mehrschichtige Polymerteilchen (a) die folgende Formel (W) erfüllt:

$$L/de^2 \leq 5,5 \quad (W).$$

7. Formkörper, umfassend die Methacrylharzzusammensetzung nach einem der Ansprüche 1 bis 6.

8. Formkörper nach Anspruch 7, welcher ein spritzgegossener Formkörper ist.

9. Verfahren zum Herstellen einer Folie, wobei das Verfahren das Unterziehen der Methacrylharzzusammensetzung nach einem der Ansprüche 1 bis 6 einer Schmelzextrusion oder einem Lösungsgießen umfasst.

**Revendications**

1. Composition de résine méthacrylique comprenant une matrice d'une résine méthacrylique (A) et d'un élastomère de caoutchouc (B) dispersés dans la matrice, la composition de résine méthacrylique satisfaisant les exigences (1) à (8) suivantes :

(1) l'élastomère de caoutchouc (B) comprend une particule polymère multicouche (a) et un copolymère à blocs (b) ;
(2) la particule polymère multicouche (a) comprend au moins une couche de composant de caoutchouc (aI) et comprend en outre une couche de composant de résine dure (aII) dans la partie la plus externe, dans laquelle la couche de composant de caoutchouc qui est la plus proche de la partie la plus externe a une taille particulaire moyenne de 0,05 à 0,3 $\mu$m, et de préférence 0,19 à 0,3 $\mu$m ;
(3) la couche de composant de caoutchouc (aI) de la particule polymère multicouche (a) est présente en une quantité de 3 à 20 % en masse dans la composition de résine méthacrylique ;
(4) le copolymère à blocs (b) comprend un bloc polymère méthacrylique (bII) et un bloc polymère acrylique (bI), dans laquelle le bloc polymère acrylique (bI) est un composant de caoutchouc ;
(5) la teneur en composant de caoutchouc totale de (aI) et (bI) dans la composition de résine méthacrylique est dans la plage de 5 à 45 % en masse ;
(6) le rapport de la teneur en (bI) sur la teneur en composant de caoutchouc totale de (aI) et (bI) dans la composition de résine méthacrylique est dans la plage de 5 à 90 % en masse ;
(7) le poids moléculaire moyen en poids Mw (bII) du bloc polymère méthacrylique (bII) du copolymère à blocs (b), le poids moléculaire moyen en poids Mw (bI) du bloc polymère acrylique (bI) du copolymère à blocs (b) et le poids moléculaire moyen en poids Mw (A) de la résine méthacrylique (A) satisfont les formules (Y) et (Z) suivantes :

$$0,5 \leq Mw\,(A)/Mw\,(bII) \leq 2,5 \qquad (Y)$$

$$5{,}000 \leq \mathrm{Mw\ (bI)} \leq 120\,000 \qquad \text{(Z) ;}$$

et

(8) 20 % ou plus du nombre total des particules de la particule polymère multicouche (a) satisfont la formule (V) suivante :

$$L > Lr \qquad \text{(V)}$$

dans laquelle L est une distance de surface à surface théorique de la couche de composant de caoutchouc de la particule polymère multicouche ; et

Lr est une distance de surface à surface mesurée de la couche de composant de caoutchouc la plus externe de la particule polymère multicouche ;

à condition que la distance de surface à surface théorique (L) de la couche de composant de caoutchouc de la particule polymère multicouche soit calculée à partir de la formule (X) suivante :

$$L = de \ x \ ((\pi/6\varphi)^{1/3}\text{-}1) \qquad \text{(X)}$$

dans laquelle de est la taille particulaire moyenne de la couche de composant de caoutchouc de la particule polymère multicouche et $\varphi$ est une fraction volumique jusqu'à la couche de composant de caoutchouc de la particule polymère multicouche ;

dans laquelle le poids moléculaire moyen en poids est déterminé tel que décrit dans la description par GPC (chromatographie d'exclusion diffusion) en utilisant un étalon de polystyrène,

dans laquelle la taille particulaire moyenne de la couche de composant de caoutchouc qui est la plus proche de la partie la plus externe et la fraction volumique jusqu'à la couche de composant de caoutchouc de la particule polymère multicouche sont déterminées tel que décrit dans la description, et

dans laquelle la distance de surface à surface de la couche de composant de caoutchouc la plus externe de la particule polymère multicouche est mesurée tel que décrit ci-dessous :

la composition de résine méthacrylique est colorée de manière électronique avec du tétroxyde de ruthénium et observée sous un microscope électronique en transmission, et la distance de la surface de couche la plus externe de la couche colorée (I) d'une particule polymère multicouche (a) à la surface de couche la plus externe de la couche (aI) d'une autre particule polymère multicouche (a) est mesurée pour déterminer Lr.

2. Composition de résine méthacrylique selon la revendication 1, dans laquelle la couche de composant de caoutchouc (aI) de la particule polymère multicouche (a) comprend au moins une couche de composant de caoutchouc (aI) qui contient un copolymère comprenant 50 à 89,99 % en masse d'une unité monomère d'ester d'acide acrylique, 44,99 à 10 % en masse d'une unité monomère monofonctionnelle supplémentaire et 0,01 à 10 % en masse d'un monomère polyfonctionnel ; la couche la plus externe comprend au moins une couche de composant de résine dure (aII) comprenant 50 à 100% en masse d'une unité monomère d'ester d'acide méthacrylique et 50 à 0 % en masse d'une unité monomère supplémentaire ; et le rapport massique (aI/aII) de la quantité totale de la couche de composant de caoutchouc (aI) sur la quantité totale de la couche de composant de résine dure (aII) est dans la plage de 30/70 à 90/10.

3. Composition de résine méthacrylique selon la revendication 1 ou 2, dans laquelle le bloc polymère acrylique (bI) du copolymère à blocs (b) est présent en une quantité de 3 à 10 % en masse dans la composition de résine méthacrylique.

4. Composition de résine méthacrylique selon l'une quelconque des revendications 1 à 3, dans laquelle le bloc polymère acrylique (bI) du copolymère à blocs (b) est un bloc de copolymère de 50 à 90 % en masse d'un ester alkylique d'acide acrylique et 50 à 10 % en masse d'un ester aromatique d'acide (méth)acrylique.

5. Composition de résine méthacrylique selon la revendication 4, dans laquelle l'ester aromatique d'acide (méth)acrylique est l'acrylate de benzyle.

6. Composition de résine méthacrylique selon l'une quelconque des revendications 1 à 5, dans laquelle la particule polymère multicouche (a) satisfait la formule suivante (W) :

$$L/de^2 \leq 5,5 \qquad (W).$$

7. Article moulé comprenant la composition de résine méthacrylique selon l'une quelconque des revendications 1 à 6.

8. Article moulé selon la revendication 7 qui est un article moulé par injection.

9. Procédé de production d'un film, le procédé comprenant soumettre la composition de résine méthacrylique selon l'une quelconque des revendications 1 à 6 à une extrusion à l'état fondu ou un coulage en solution.

Fig.1

2.0μm

**REFERENCES CITED IN THE DESCRIPTION**

**Patent documents cited in the description**

- JP S5936645B B
- WO 2012057079 A
- JP 2002194167 A
- WO 2017188290 A
- WO 2018074550 A1
- EP 3476595 A1